# EUROPÄISCHE PATENTANMELDUNG

(11) **EP 4 807 216 A1**
(43) Veröffentlichungstag der Anmeldung: **16.09.2026**
(21) Anmeldenummer: 25162489.6
(22) Anmeldetag: 10.03.2025
(51) Int. Cl.: F16H 47/04

(54) **ANTRIEBSVORRICHTUNG, ACHSE, GETRIEBEGEHÄUSEANORDNUNG UND ARBEITSMASCHINE**

(71) Anmelder: Deere & Company, Moline, IL 61265 (US)
(72) Erfinder: MANN, Manuel, 68163 Mannheim (DE)
(74) Vertreter: Stein, Stefan

(57) **Zusammenfassung**

Die Erfindung betrifft eine Antriebsvorrichtung (20) für eine Arbeitsmaschine (10) oder eine Achse (100) oder eine Getriebegehäuseanordnung (900). Die Antriebsvorrichtung (20) umfasst einen Antrieb (52), einen Abtrieb (54), einen ersten und zweiten Variator (50, 56), eine erste Übersetzungseinheit (58) mit mindestens einem ersten Eingang (200) und einem zweiten Eingang (200) und mindestens einem ersten Ausgang (204), wobei der erste Variator (50) mit dem Antrieb (52) verbunden ist, und der zweite Variator (56) mit dem ersten und zweiten Eingang (200, 202) verbunden ist, wobei der zweite Variator (56) über die erste Übersetzungseinheit (58) mit dem Abtrieb (54) verbindbar ist. Die Erfindung betrifft weiter eine Achse (100), eine Arbeitsmaschine (10) und eine Getriebegehäuseanordnung (900).

## Beschreibung

Die Erfindung betrifft eine Antriebsvorrichtung gemäss dem Oberbegriff des unabhängigen Anspruchs 1, eine Achse gemäss dem Oberbegriff des unabhängigen Anspruchs 10 und eine Getriebegehäuseanordnung gemäss dem Oberbegriff des unabhängigen Anspruchs 11 und eine Arbeitsmaschine gemäss dem Oberbegriff des unabhängigen Anspruchs 14.

Arbeitsmaschinen, bevorzugt Baumaschinen oder landwirtschaftliche Arbeitsfahrzeuge, besonders bevorzugt landwirtschaftliche Zugfahrzeuge oder Ackerschlepper oder Traktoren, werden üblicherweise durch Motoren angetrieben. Der Motor kann dabei eine oder mehrere Achsen oder Fahrzeugachsen der Arbeitsmaschine, insbesondere eine Hinterachse und/oder eine Vorderachse antreiben. Der Antrieb der Achse(n) erfolgt für gewöhnlich von der Kurbelwelle des Motors über ein Getriebe mit veränderbarer Übersetzung und über eines oder mehrere Differenzialgetriebe. Das oder die Differenzialgetriebe kann oder können abtriebsseitig mit den Fahrzeugachsen, insbesondere mit den Wellen der Räder, bevorzugt den Vorder- und/oder Hinterräder, in Antriebsverbindung stehen.

Ebenso kann die Arbeitsmaschine zusätzlich einen ersten Leistungsausgang, bevorzugt einen mechanische Leistungsausgang, besonders bevorzugt eine Zapfwelleneinheit aufweisen. Der erste Leistungsausgang kann sich an einer Rückseite der Arbeitsmaschine befinden, insbesondere in der Nachbarschaft einer Anbauschnittstelle für Arbeitsgeräte. Zusätzlich kann sich ein zweiter Leistungsausgang an einer Vorderseite der Arbeitsmaschine befinden.

Ausgehend von diesem Stand der Technik ist es eine Aufgabe der vorliegenden Erfindung eine gegenüber dem Stand der Technik verbesserte Antriebsvorrichtung, Achse, Arbeitsmaschine und Getriebegehäuseanordnung vorzuschlagen. Im Speziellen kann es eine Aufgabe der vorliegenden Erfindung sein eine Antriebsvorrichtung und/oder eine Achse und/oder eine Arbeitsmaschine und/oder eine Getriebegehäuseanordnung vorzuschlagen, die konstruktiv einfacher und/oder kompakter und/oder modularer ausgestaltet sind und/oder mit dem Motor und/oder hybrid und/oder elektrisch und/oder hydraulisch betreibbar und/oder mit dem Motor und/oder hybrid und/oder elektrisch und/oder hydraulisch antreibbar sind.

Diese Aufgabe wird durch eine Antriebsvorrichtung mit den Merkmalen des Anspruchs 1 und eine Achse mit den Merkmalen des Anspruchs 10 und einer Getriebegehäuseanordnung mit den Merkmalen des Anspruchs 11 und eine Arbeitsmaschine mit den Merkmalen des Anspruchs 14 und gelöst. Die abhängigen Ansprüche beziehen sich auf besonders vorteilhafte Ausführungsformen der Erfindung.

Erfindungsgemäss wird eine Antriebsvorrichtung für eine Arbeitsmaschine oder eine Achse oder eine Getriebegehäuseanordnung vorgeschlagen. Die Antriebsvorrichtung umfasst einen Antrieb, insbesondere eine Antriebswelle oder Eingangswelle, und einen Abtrieb, insbesondere eine Abtriebswelle oder Ausgangswelle, und einen ersten und zweiten Variator. Die Antriebsvorrichtung umfasst weiter eine Übersetzungseinheit mit mindestens einem ersten Eingang und einem zweiten Eingang, insbesondere genau einem ersten und zweite Eingang, und mindestens einem ersten Ausgang, insbesondere genau einem ersten Ausgang oder einem ersten und zweiten Ausgang. Der erste Variator ist mit dem Antrieb, insbesondere der Antriebswelle oder der Eingangswelle, verbunden. Der zweite Variator ist mit dem ersten und zweiten Eingang verbunden. Der zweite Variator ist mit dem Abtrieb über die erste oder durch die erste oder mit der ersten Übersetzungseinheit verbindbar.

Unter verbunden kann bevorzugt mechanisch verbunden und/oder mechanisch wirkverbunden verstanden werden. Im Speziellen kann unter verbunden zusätzlich oder alternativ antreibbar verbunden, also drehmoment- und/oder drehzahlübertragend verbunden, und/oder gekoppelt, also insbesondere mechanisch gekoppelt und/oder starr gekoppelt, und/oder drehfest gekoppelt verstanden werden. Unter verbindbar kann bevorzugt mechanisch verbindbar und/oder mechanisch wirkverbindbar verstanden werden. Im Speziellen kann unter verbindbar zusätzlich oder alternativ antreibbar verbindbar, also drehmoment- und/oder drehzahlübertragend verbindbar, und/oder koppelbar, also mechanisch koppelbar und/oder starr koppelbar, und/oder drehfest verbindbar verstanden werden. Unter verbunden kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Unter einem Schaltelement, insbesondere einem ersten und/oder zweiten und/oder dritten und/oder vierten und/oder fünften und/oder sechsten und/oder siebten Schaltelement, kann ein Verbindungsteil verstanden werden, mittels dem wenigstens ein eine Energie und/oder Kraft und/oder ein Drehmoment und/oder eine Drehzahl übertragendes Teil mit einem weiteren eine Energie und/oder Kraft und/oder ein Drehmoment und/oder eine Drehzahl übertragenden Teil oder mit einem orts- oder gehäusefesten Teil antriebswirksam verbindbar ist. Das jeweilige Schaltelement ist zwischen zumindest einen geöffneten und einen geschlossenen Zustand schaltbar, wobei das Schaltelement im geöffneten Zustand weder eine Energie und/oder Kraft und/oder ein Drehmoment und/oder eine Drehzahl zwischen zwei mit dem Schaltelement zusammenwirkenden Teilen übertragen kann, und wobei das Schaltelement im geschlossenen Zustand eine Energie und/oder Kraft und/oder ein Drehmoment und/oder eine Drehzahl zwischen den zwei mit dem Schaltelement zusammenwirkenden Teilen übertragen kann. Sofern eine Verbindung, insbesondere eine Wirkverbindung, zwischen zwei Elementen oder Komponenten der Antriebsvorrichtung besteht, werden Energie und/oder Kraft und/oder ein Drehmoment und/oder eine Drehzahl von einem Element oder einer Komponente auf das andere Element oder die andere Komponente übertragen. Ein Schaltelement, insbesondere das erste und/oder zweite und/oder dritte und/oder vierte und/oder fünfte und/oder sechste und/oder siebte Schaltelement, können eine Kupplung, insbesondere eine Lamellenkupplung, und/oder eine Bremse und/oder eine Synchronisierung und/oder eine Klauenkupplung sein.

Im Folgenden kann ein Eingang, insbesondere der erste und/oder der zweite und/oder ein dritter Eingang, eine mechanische Leistungsschnittstelle sein, mit welcher eine Kraft und/oder ein Drehmoment und/oder eine Drehzahl eingeleitet werden kann, bevorzugt in die Übersetzungseinheiten, besonders bevorzugt in die erste Übersetzungseinheit und/oder eine zweite Übersetzungseinheit eingeleitet werden kann. Im Folgenden kann ein Ausgang, insbesondere der erste und/oder zweite und/oder dritte Ausgang und/oder der Abtrieb und/oder die Vorgelegewelle, eine mechanische Leistungsschnittstelle sein, mit welcher eine Kraft und/oder ein Drehmoment und/oder eine Drehzahl ausgeleitet werden kann, bevorzugt aus den Übersetzungseinheiten, besonders bevorzugt aus der der ersten Übersetzungseinheit und/oder der zweiten Übersetzungseinheit ausgeleitet werden kann.

Ausserdem können der erste und zweite Eingang miteinander verbunden sein, insbesondere als ein gemeinsamer Eingang ausgebildet sein. Der erste Eingang kann ein erstes Antriebselement umfassen oder als ein erstes Antriebselement ausgebildet sein. Der zweite Eingang kann ein zweites Antriebselement umfassen oder als ein zweites Antriebselement ausgebildet sein. Der gemeinsame Eingang kann ein gemeinsame Antriebselement umfassen oder als ein gemeinsames Antriebselement ausgebildet sein. Der erste und/oder zweite Eingang oder der gemeinsame Eingang, insbesondere das erste und/oder zweite Antriebselement oder das gemeinsame Antriebselement, kann oder können beispielsweise als eine Welle oder ein Zahnrad und/oder ein Schaltelement ausgebildet sein und/oder diese umfassen. Der erste Ausgang kann ein erstes Abtriebselement umfassen oder als ein erstes Abtriebselement ausgebildet sein. Der zweite Ausgang kann ein zweites Abtriebselement umfassen oder als ein zweites Abtriebselement ausgebildet sein. Der erste und/oder zweite Ausgang, insbesondere das erste und/oder zweite Abtriebselement, kann oder können beispielsweise als eine Welle und/oder ein Zahnrad und/oder ein Schaltelement ausgebildet sein und/oder diese umfassen.

Der erste und/oder zweite Eingang oder der gemeinsame Eingang können zur eingangsseitigen Anbindung und/oder zur Verbindung der ersten Übersetzungseinheit mit dem zweiten Variator oder einer angetriebenen Komponente der Antriebsvorrichtung ausgebildet sein. Über den ersten und/oder zweiten Eingang kann eine Kraft und/oder ein Drehmoment und/oder eine Drehzahl in die erste Übersetzungseinheit einleitbar oder an diese übertragbar sein. Der erste und/oder zweite Ausgang kann oder können zur ausgangsseitigen Anbindung, insbesondere an den Abtrieb, ausgebildet sein. Die erste Übersetzungseinheit kann mit dem oder durch den ersten und/oder zweiten Ausgang mit einer weiteren Übersetzungseinheit und/oder dem Abtrieb, insbesondere der Ausgangswelle, verbindbar oder verbunden sein. Über den ersten und/oder zweiten Ausgang kann eine Kraft und/oder ein Drehmoment und/oder eine Drehzahl in eine weitere Übersetzungseinheit und/oder den Abtrieb, insbesondere die Ausgangswelle, einleitbar oder an diese oder diesen übertragbar sein.

Der erste Variator kann direkt oder über eine oder mit einer oder durch eine erste Übersetzungsstufe, insbesondere eine fünfte Stirnradstufe oder ein erstes Zahnradpaar oder drei oder mehr Zahnräder oder ein weiteres Planetengetriebe, bevorzugt ein drittes Planetengetriebe, oder ein sonstiges Getriebe, mit dem Antrieb verbunden sein. Der zweite Variator kann direkt oder über eine oder mit einer oder durch eine zweite Übersetzungsstufe, insbesondere eine sechste Stirnradstufe oder ein zweites Zahnradpaar oder drei oder mehr Zahnräder oder ein weiteres Planetengetriebe, bevorzugt ein viertes Planetengetriebe, oder ein sonstiges Getriebe mit dem ersten und zweiten Eingang verbunden sein.

Der Antrieb, insbesondere die Antriebswelle oder Eingangswelle, und/oder der Abtrieb, insbesondere die Abtriebswelle oder Ausgangswelle kann, eine Vollwelle sein. Der Antrieb und der Abtrieb können koaxial zueinander angeordnet sein. Der Abtrieb kann mit einem Fahrantrieb verbunden sein. Im Speziellen kann der Abtrieb mit einer oder mehreren oder durch eine oder mehrere weitere Übersetzungsstufen mit dem Fahrantrieb verbunden sein. Die eine oder mehrere weitere Übersetzungsstufen können als weitere Stirnradstufen und/oder weitere Zahnradpaare und/oder drei oder mehr Zahnräder und/oder weitere Planetengetriebe oder sonstige Getriebe ausgebildet sein.

Die Antriebsvorrichtung, oder insbesondere die Arbeitsmaschine oder die Achse, kann den Fahrantrieb, insbesondere einen Vorderachsantrieb und/oder einen Hinterachsantrieb umfassen. Der Abtrieb kann mit einem Fahrantrieb, insbesondere dem Vorderachsantrieb und/oder dem Hinterachsantrieb, verbunden sein. Der Fahrantrieb kann eine erste Fahrzeugachse oder Vorderachse und/oder eine zweite Fahrzeugachse oder Hinterachse und/oder ein erstes Differenzialgetriebe oder ein Vorderachsdifferenzial und/oder ein zweites Differenzialgetriebe oder ein Hinterachsdifferenzial und/oder das oder die Bodeneingriffsmittel umfassen. Der Vorderachsantrieb kann die erste Fahrzeugachse oder Vorderachse und/oder das erste Differenzialgetriebe oder das Vorderachsdifferenzial und/oder das oder die Bodeneingriffsmittel umfassen. Der Hinterachsantrieb kann die zweite Fahrzeugachse oder Hinterachse und/oder das zweite Differenzialgetriebe oder das Hinterachsdifferenzial und/oder das oder die Bodeneingriffsmittel umfassen. Das erste Differenzialgetriebe kann antriebsseitig mit dem Abtrieb und/oder der Vorgelegewelle verbindbar oder verbunden sein. Ausserdem kann das erste Differenzialgetriebe abtriebsseitig mit der ersten Fahrzeugachse, insbesondere mit einer linken Welle und einer rechten Welle zum Antrieb von Bodeneingriffsmitteln verbindbar oder verbunden sein. Das zweite Differenzialgetriebe kann antriebsseitig mit dem Abtrieb und/oder der Vorgelegewelle verbindbar oder verbunden sein. Ausserdem kann das zweite Differenzialgetriebe abtriebsseitig mit der zweiten Fahrzeugachse, insbesondere mit einer linken Welle und einer rechten Welle zum Antrieb von Bodeneingriffsmitteln verbindbar oder verbunden sein.

Die Antriebsvorrichtung und/oder die Arbeitsmaschine und/oder die Achse kann oder können eine Steuereinheit umfassen. Die Steuereinheit kann mit dem ersten und/oder zweiten Variator und/oder einem Motor signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Antriebsvorrichtung, insbesondere von einem oder mehreren Drehzahl- und/oder Drehmomentsensoren der Antriebsvorrichtung, und/oder des ersten und/oder zweiten Variators und/oder Motors zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die Drehzahl und/oder das Drehmoment der Antriebsvorrichtung, insbesondere des ersten und/oder zweiten Variators, und/oder Motors einzustellen und/oder zu verstellen, insbesondere eine vorgebbare Drehzahl und/oder ein vorgebbares Drehmoment einzustellen und/oder zu verstellen. Die Steuereinheit kann konfiguriert sein, die Drehzahl des ersten Leistungsausgangs einzustellen und/oder zu verstellen.

Die Schaltelemente, insbesondere das erste und/oder zweite und/oder dritte und/oder vierte und/oder fünfte und/oder sechste und/oder siebte Schaltelement, können mit der Steuereinheit signalverbunden und/oder wirkend gekoppelt und/oder signalübertragend und/oder datenleitend verbunden sein. Im Speziellen kann jedes Schaltelement ein Ventil oder eine Ventilanordnung, insbesondere ein Steuerventil, oder einen Aktuator zum Ansteuern und/oder Einstellen und/oder Verstellen des jeweiligen zugeordneten Schaltelements umfassen. Das Ventil oder die Ventilanordnung oder der Aktuator können mit dem jeweiligen zugeordneten Schaltelement verbunden und/oder wirkend gekoppelt sein. Die Steuereinheit kann mit dem Ventil oder der Ventilanordnung oder dem Aktuator des jeweiligen zugeordneten Schaltelements signalverbunden und/oder wirkend gekoppelt und/oder signalübertragend und/oder datenleitend verbunden sein. Die Steuereinheit kann konfiguriert sein, das Schaltelement, insbesondere über das oder mit dem jeweiligen zugeordneten Ventil oder der Ventilanordnung oder dem Aktuator, anzusteuern und/oder einzustellen und/oder zu verstellen. Die Steuereinheit kann konfiguriert sein, das Schaltelement, insbesondere über das oder mit dem jeweiligen zugeordneten Ventil oder die Ventilanordnung oder den Aktuator, in die erste Position, also den geöffneten Zustand, oder die zweite Position, also den geschlossenen Zustand, einzustellen und/oder zu verstellen, insbesondere auch von der ersten in die zweite Position zu bewegen und umgekehrt.

Im Speziellen kann die Antriebsvorrichtung für die Achse geeignet sein, insbesondere eine mit dem Motor und/oder hybrid und/oder elektrisch und/oder hydraulisch angetriebene Achse sein. Ausserdem kann die Antriebsvorrichtung an und/oder in der Achse angeordnet sein. Im Speziellen kann die Antriebsvorrichtung für die Arbeitsmaschine geeignet sein, insbesondere eine mit dem Motor und/oder hybrid und/oder elektrisch und/oder hydraulisch angetriebene Arbeitsmaschine sein. Ausserdem kann die Antriebsvorrichtung an und/oder in der Arbeitsmaschine angeordnet sein.

Die Antriebsvorrichtung kann eine Leistungselektronik umfassen. Mit der Leistungselektronik kann Leistung, insbesondere elektrische Leistung, zwischen dem ersten und/oder zweiten Variator, insbesondere einem ersten und/oder zweiten Elektromotor, und/oder einem Energiespeicher übertragbar sein. Die Antriebsvorrichtung oder die Achse oder die Arbeitsmaschine kann die Leistungselektronik und/oder den Energiespeicher umfassen. Die Leistungselektronik kann in der Steuereinheit integriert sein oder als externe Einheit(en) von der Steuereinheit ansteuerbar sein. Die Leistungselektronik kann ein elektronisches Steuergerät und/oder einen Inverter und/oder einen Spannungswandler umfassen. Im Betrieb kann der Inverter und/oder der Spannungswandler die Spannung des Energiespeichers in eine Spannung oder Energie oder Leistung umwandeln, welche der erste und/oder zweite Variator benötigen. Zum Aufladen des Energiespeichers kann dieser Vorgang umgekehrt werden. Der Energiespeicher kann vom elektronischen Steuergerät ansteuerbar sein, um elektrische Energie und/oder Leistung zu speichern und/oder an den ersten und/oder zweiten Variator, insbesondere dem ersten und/oder zweiten Elektromotor, abzugeben. Die Steuereinheit oder das elektronische Steuergerät und/oder der erste und/oder zweite Variator, insbesondere der erste und/oder zweite Elektromotor, können mit der Leistungselektronik und/oder dem Energiespeicher elektrisch verbunden und/oder elektrisch koppelbar oder gekoppelt sein. Die Leistungselektronik, insbesondere das elektronische Steuergerät, kann in die Steuereinheit integriert sein. Die Antriebsvorrichtung oder die Achse oder die Arbeitsmaschine, kann den oder die Energiespeicher umfassen. Der erste und/oder zweite Variator können als Generator ausgebildet sein, und insbesondere in einem Rekuperationsbetrieb den Energiespeicher aufladen. Der oder die Energiespeicher kann oder können mit dem ersten und/oder zweiten Variator, insbesondere dem ersten und/oder zweiten Elektromotor, elektrisch verbunden und/oder elektrisch koppelbar sein. Der Energiespeicher kann ein elektrischer Energiespeicher sein. Der Energiespeicher kann den ersten und/oder zweiten Variator, insbesondere den ersten und/oder zweiten Elektromotor mit Energie, insbesondere elektrischer Energie versorgen. Der Energiespeicher kann mit dem ersten und/oder zweiten Variator, insbesondere dem ersten und/oder zweiten Elektromotor, verbunden und/oder koppelbar sein, insbesondere elektrisch verbunden und/oder elektrisch koppelbar sein. Der Energiespeicher kann als eine Batterie und/oder ein Akku und/oder eine Superkondensator und/oder eine Brennstoffzelle und/oder eine sonstige Vorrichtung zur Speicherung von elektrischer Energie ausgebildet sein.

Wesentlich für die Erfindung ist, dass die Antriebsvorrichtung vorteilhafterweise als eine konstruktiv einfache Antriebsvorrichtung realisiert werden kann und ausserdem über einen kompakten Aufbau verfügt. Darüber hinaus kann die Antriebsvorrichtung modular aufgebaut werden, wodurch beispielsweise die erste Übersetzungseinheit auf einfache Art und Weise ausgetauscht werden kann. Wesentlicher Vorteil dieser Erfindung ist, dass gleiche Funktionen in elektrisch oder hydrostatisch stufenlosen Getrieben durch gleiche Module / Übersetzungseinheiten aus verbrennungsmotorisch angetriebenen Stufengetrieben und leistungsverzweigten Getrieben verwendet werden können. Durch diese modularen Übersetzungseinheiten können Komplexitäten und Kosten reduziert werden. Zudem können die elektrisch oder hydrostatisch stufenlosen Getrieben bedarfsgerecht gebaut werden.

In Ausgestaltung der Erfindung umfasst die erste Übersetzungseinheit eine erste Stirnradstufe und/oder eine zweite Stirnradstufe und/oder ein Planetengetriebe, insbesondere ein erstes Planetengetriebe, und mindestens ein erstes und zweites Schaltelement. Die erste Übersetzungseinheit kann insbesondere auch ein drittes Schaltelement umfassen. Im Speziellen kann die erste Übersetzungseinheit beispielsweise die folgenden Ausführungsformen umfassen:
- die erste Stirnradstufe und das erste und zweite Schaltelement, insbesondere genau nur diese Komponenten, oder
- die erste und zweite Stirnradstufe und das erste und zweite Schaltelement, insbesondere genau nur diese Komponenten, oder
- die erste Stirnradstufe und das Planetengetriebe, insbesondere das erste Planetengetriebe, und das erste und zweite und dritte Schaltelement, insbesondere genau nur diese Komponenten.

In einer ersten Ausführungsform umfasst die erste Übersetzungseinheit die erste Stirnradstufe und das erste und zweite Schaltelement, kann:
- das erste Schaltelement mit dem zweiten Variator verbunden sein, und/oder
- das zweite Schaltelement mit dem zweiten Variator verbunden sein, und/oder
- das erste und zweite Schaltelement miteinander verbunden sein, und/oder
- der zweite Variator durch das oder über das erste Schaltelement mit der ersten Stirnradstufe verbindbar oder verbunden sein und/oder der zweite Variator durch das oder über das zweite Schaltelement mit der ersten Stirnradstufe verbindbar oder verbunden sein, und/oder
- die erste Stirnradstufe mit dem Abtrieb, insbesondere der Ausgangswelle, verbunden sein, und/oder
- das erste und/oder zweite Schaltelement kann über die oder mit der ersten Stirnradstufe mit dem Abtrieb, insbesondere der Ausgangswelle, verbindbar oder verbunden sein.

Ausserdem kann die erste Übersetzungseinheit zwei Eingänge, insbesondere den ersten und zweiten Eingang und mindestens einen Ausgang, insbesondere den ersten Ausgang oder den ersten und zweiten Ausgang, aufweisen. Der erste Eingang kann das erste Schaltelement sein oder der erste Eingang, insbesondere das erste Antriebselement, kann mit dem ersten Schaltelement verbunden sein. Mit anderen Worten, das erste Schaltelement kann als der erste Eingang ausgebildet sein oder kann der erste Eingang sein oder mit dem ersten Eingang, insbesondere dem ersten Antriebselement, verbunden sein. Der zweite Eingang kann das zweite Schaltelement sein oder der zweite Eingang, insbesondere das zweite Antriebselement, kann mit dem zweiten Schaltelement verbunden sein. Mit anderen Worten, das zweite Schaltelement kann als der zweite Eingang ausgebildet sein oder kann der zweite Eingang sein oder mit dem zweiten Eingang, insbesondere dem zweiten Antriebselement, verbunden sein.

Der erste Ausgang kann die erste Stirnradstufe sein oder der erste Ausgang, insbesondere das erste Abtriebselement, mit der ersten Stirnradstufe verbunden sein. Mit anderen Worten, die erste Stirnradstufe kann als der erste Ausgang ausgebildet sein oder kann der erste Ausgang sein oder kann mit dem ersten Ausgang, insbesondere dem ersten Abtriebselement, verbunden sein. Das erste Abtriebselement kann mit dem Abtrieb verbunden sein.

In einer zweiten Ausführungsform umfasst die erste Übersetzungseinheit die erste und zweite Stirnradstufe und das erste und zweite Schaltelement, kann zusätzlich oder alternativ zur ersten Ausführungsform:
- das erste Schaltelement mit dem zweiten Variator verbunden sein, und/oder
- das zweite Schaltelement mit dem zweiten Variator verbunden sein, und/oder
- das erste und zweite Schaltelement miteinander verbunden sein, und/oder
- der zweite Variator durch das oder über das erste Schaltelement mit der ersten Stirnradstufe verbindbar oder verbunden sein, und/oder
- der zweite Variator durch das oder über das zweite Schaltelement mit der zweiten Stirnradstufe verbindbar oder verbunden sein, und/oder
- die erste Stirnradstufe mit dem Abtrieb, insbesondere der Ausgangswelle, verbunden sein, und/oder
- die zweite Stirnradstufe mit dem Abtrieb, insbesondere der Ausgangswelle, verbunden sein, und/oder
- das erste Schaltelement kann über die oder mit der ersten Stirnradstufe mit dem Abtrieb, insbesondere der Ausgangswelle, verbindbar oder verbunden sein, und/oder
- das zweite Schaltelement kann über die oder mit der zweiten Stirnradstufe mit dem Abtrieb, insbesondere der Ausgangswelle, verbindbar oder verbunden sein.

In der zweiten Ausführungsform kann zusätzlich zur ersten Ausführungsform der zweite Ausgang die zweite Stirnradstufe sein oder der zweite Ausgang, insbesondere das zweite Abtriebselement, mit der zweiten Stirnradstufe verbunden sein. Mit anderen Worten, die zweite Stirnradstufe kann als der zweite Ausgang ausgebildet sein oder kann der zweite Ausgang sein oder kann mit dem zweiten Ausgang, insbesondere dem zweiten Abtriebselement, verbunden sein. Das zweite Abtriebselement kann mit dem Abtrieb verbunden sein.

In einer dritten Ausführungsform umfasst die erste Übersetzungseinheit die erste Stirnradstufe und das Planetengetriebe, insbesondere das erste Planetengetriebe, und das erste und zweite und dritte Schaltelement, kann zusätzlich oder alternativ zur ersten und/oder zweiten Ausführungsform:
- das erste Schaltelement mit dem zweiten Variator verbunden sein, und/oder
- das zweite Schaltelement mit dem zweiten Variator verbunden sein, und/oder
- das erste und zweite Schaltelement miteinander verbunden sein, und/oder
- der zweite Variator durch das erste Schaltelement und/oder durch das zweite Schaltelement mit dem ersten Planetengetriebe, bevorzugt einer Komponente und/oder der gleichen Komponente des ersten Planetengetriebes, besonders bevorzugt dem ersten Planetenträger des ersten Planetengetriebes, verbindbar sein, und/oder
- das erste Planetengetriebe, bevorzugt eine Komponente des ersten Planetengetriebes, besonders bevorzugt der erste Planetenträger des ersten Planetengetriebes, mit der ersten Stirnradstufe verbunden sein, und/oder
- der zweite Variator mit dem ersten Planetengetriebe, bevorzugt einer Komponente des ersten Planetengetriebes, besonders bevorzugt der ersten Sonne des ersten Planetengetriebes verbunden sein, und/oder
- das dritte Schaltelement, das insbesondere als Bremse ausgebildet sein kann, mit dem ersten Planetengetriebe, bevorzugt einer Komponente des ersten Planetengetriebes, besonders bevorzugt dem ersten Hohlrad des ersten Planetengetriebes verbunden sein, und/oder
- das erste und/oder zweite Schaltelement kann über die oder mit der ersten Stirnradstufe mit dem Abtrieb, insbesondere der Ausgangswelle, verbindbar oder verbunden sein, und/oder
- das erste Planetengetriebe, insbesondere der erste Planetenträger, kann über die oder mit der ersten Stirnradstufe mit dem Abtrieb, insbesondere der Ausgangswelle, verbindbar oder verbunden sein.

In der dritten Ausführungsform kann die erste Übersetzungseinheit zwei Eingänge, insbesondere den ersten und zweiten Eingang und einen Ausgang, insbesondere den ersten Ausgang, aufweisen. Der erste Eingang kann das erste Schaltelement sein oder der erste Eingang, insbesondere das erste Antriebselement, kann mit dem ersten Schaltelement verbunden sein. Mit anderen Worten, das erste Schaltelement kann als der erste Eingang ausgebildet sein oder kann der erste Eingang sein oder mit dem ersten Eingang, insbesondere dem ersten Antriebselement, verbunden sein. Der zweite Eingang kann das zweite Schaltelement und/oder die erste Sonne des ersten Planetengetriebes sein oder der zweite Eingang, insbesondere das zweite Antriebselement, kann mit dem zweiten Schaltelement und/oder die erste Sonne des ersten Planetengetriebes verbunden sein. Mit anderen Worten, das zweite Schaltelement und/oder die erste Sonne des ersten Planetengetriebes können als der zweite Eingang ausgebildet sein oder können der zweite Eingang sein oder mit dem zweiten Eingang, insbesondere dem zweiten Antriebselement, verbunden sein.

Der erste Ausgang kann die erste Stirnradstufe sein oder der erste Ausgang, insbesondere das erste Abtriebselement, mit der ersten Stirnradstufe verbunden sein. Mit anderen Worten, die erste Stirnradstufe kann als der erste Ausgang ausgebildet sein oder kann der erste Ausgang sein oder kann mit dem ersten Ausgang, insbesondere dem ersten Abtriebselement, verbunden sein. Das erste Abtriebselement kannn mit dem Abtrieb verbunden sein. Vorteilhafterweise kann dadurch eine modulare und/oder kompakte Antriebsvorrichtung realisiert werden. Darüber hinaus kann von Vorteil die erste Übersetzungseinheit austauschbar, insbesondere auch auf einfache Art und Weise in die oder aus der Antriebsvorrichtung oder Arbeitsmaschine ein- und ausbaubar sein. Ausserdem können die oben genannten Vorteile der Antriebsvorrichtung realisiert werden.

In Ausgestaltung der Erfindung umfasst die Antriebsvorrichtung eine zweite Übersetzungseinheit. Die zweite Übersetzungseinheit umfasst mindestens eine dritte Stirnradstufe und/oder eine vierte Stirnradstufe und/oder ein zweites Planetengetriebe, und mindestens ein viertes Schaltelement. Die zweite Übersetzungseinheit weist mindestens einen dritten Eingang und mindestens einen dritten Ausgang auf.

Die erste und zweite Übersetzungseinheit können einen gemeinsamen Eingang aufweisen. Der gemeinsame Eingang kann den ersten und/oder zweiten und/oder dritten Eingang umfassen. Der gemeinsame Eingang und/oder der dritte Eingang kann mit dem zweiten Variator verbunden sein. Der zweite Variator kann direkt oder über die oder mit der oder durch die zweite Übersetzungsstufe mit dem gemeinsamen Eingang und/oder dem dritten Eingang verbunden sein. Der dritte Eingang kann ein drittes Antriebselement umfassen oder als ein drittes Antriebselement ausgebildet sein. Der dritte Eingang, insbesondere das dritte Antriebselement kann beispielsweise als eine Welle oder ein Zahnrad und/oder ein Schaltelement ausgebildet sein und/oder diese umfassen. Der dritte Ausgang kann ein drittes Abtriebselement umfassen oder als ein drittes Abtriebselement ausgebildet sein. Der dritte Ausgang, insbesondere das dritte Abtriebselement kann beispielsweise als eine Welle und/oder ein Zahnrad und/oder ein Schaltelement ausgebildet sein und/oder diese umfassen. Der dritte Eingang kann zur eingangsseitigen Anbindung und/oder zur Verbindung der zweiten Übersetzungseinheit mit dem zweiten Variator oder einer angetriebenen Komponente der Antriebsvorrichtung ausgebildet sein. Über dritten Eingang kann eine Kraft und/oder ein Drehmoment und/oder eine Drehzahl in die zweite Übersetzungseinheit einleitbar oder an diese übertragbar sein. Der dritte Ausgang kann zur ausgangsseitigen Anbindung, insbesondere an den Abtrieb und/oder die Vorgelegewelle, ausgebildet sein.

Die zweite Übersetzungseinheit kann mit dem oder durch den dritten Ausgang mit einer weiteren Übersetzungseinheit und/oder dem Abtrieb, insbesondere der Ausgangswelle, und/oder der Vorgelegewelle verbindbar sein. Über den dritten Ausgang kann eine Kraft und/oder ein Drehmoment und/oder eine Drehzahl in eine weitere Übersetzungseinheit und/oder den Abtrieb, insbesondere die Ausgangswelle, und/oder die Vorgelegewelle einleitbar oder an diese oder diesen übertragbar sein. Der dritte Ausgang der zweiten Übersetzungseinheit kann mit dem Abtrieb und/oder der Vorgelegewelle verbindbar oder verbunden sein.

Im Speziellen kann die zweite Übersetzungseinheit beispielsweise die folgenden Komponenten umfassen:
- die dritte und vierte Stirnradstufe und das vierte Schaltelement, insbesondere genau nur diese Komponenten, oder
- die dritte und vierte Stirnradstufe und das zweite Planetengetriebe und das vierte Schaltelement, insbesondere genau nur diese Komponenten.

Umfasst die zweite Übersetzungseinheit die dritte und vierte Stirnradstufe und das vierte Schaltelement, kann:
- die dritte Stirnradstufe mit dem zweiten Variator und/oder der zweiten Übersetzungsstufe verbunden sein, und/oder
- die dritte Stirnradstufe mit der vierten Stirnradstufe verbunden sein, insbesondere mit der vierten Stirnradstufe in Eingriff stehen oder über eine Welle verbunden sein, und/oder
- die vierte Stirnradstufe mit dem vierten Schaltelement verbunden sein, und/oder
- die vierte Stirnradstufe mit dem vierten oder durch das vierte Schaltelement mit einer Vorgelegewelle verbindbar sein, und/oder
- der zweite Variator durch das oder über die dritte und vierte Stirnradstufe mit dem vierten Schaltelement verbindbar oder verbunden sein und/oder der zweite Variator durch das oder über das vierte Schaltelement mit der Vorgelegewelle verbindbar oder verbunden sein, und/oder
- die Vorgelegewelle mit dem Abtrieb, insbesondere der Ausgangswelle, verbindbar oder verbunden sein.

Umfasst die zweite Übersetzungseinheit die dritte und vierte Stirnradstufe und das zweite Planetengetriebe und das vierte Schaltelement, kann:
- das zweite Planetengetriebe, bevorzugt eine Komponente des zweiten Planetengetriebes, besonders bevorzugt das zweite Hohlrad des zweiten Planetengetriebes mit dem zweiten Variator und/oder der zweiten Übersetzungsstufe verbunden sein, und/oder
- die zweite Übersetzungsstufe und das zweite Hohlrad können in Eingriff stehen, insbesondere miteinander kämmen, oder das zweite Hohlrad als Zahnrad oder Komponente der zweiten Übersetzungsstufe, insbesondere der sechsten Stirnradstufe, ausgebildet sein, und/oder
- das zweite Hohlrad kann mit dem ersten und/oder zweiten Schaltelement verbunden sein, und/oder
- die zweite Sonne des zweiten Planetengetriebes kann mit dem Antrieb verbunden sein, und/oder
- der zweite Planetenträger des zweiten Planetengetriebes mit der dritten Stirnradstufe verbunden sein, und/oder
- die dritte Stirnradstufe mit der vierten Stirnradstufe verbunden sein, insbesondere mit der vierten Stirnradstufe in Eingriff stehen oder über eine Welle verbunden sein, und/oder
- die vierte Stirnradstufe mit dem vierten Schaltelement verbunden sein, und/oder
- die vierte Stirnradstufe mit dem vierten oder durch das vierte Schaltelement mit der Vorgelegewelle verbindbar sein, und/oder
- und/oder der zweite Variator durch das oder über das vierte Schaltelement mit der Vorgelegewelle verbindbar oder verbunden sein, und/oder
- die Vorgelegewelle mit dem Abtrieb, insbesondere durch eine oder mit einer dritten Übersetzungsstufe, verbindbar oder verbunden sein.

Der dritte Eingang kann die dritte Stirnradstufe oder das zweite Hohlrad des zweiten Planetengetriebes sein oder der dritte Eingang, insbesondere das dritte Antriebselement, kann mit der dritten Stirnradstufe oder dem zweiten Hohlrad des zweiten Planetengetriebes verbunden sein. Mit anderen Worten, die dritte Stirnradstufe oder das zweite Hohlrad des zweiten Planetengetriebes kann als der dritte Eingang ausgebildet sein oder kann der dritte Eingang sein oder mit dem dritten Eingang, insbesondere dem dritten Antriebselement, verbunden sein. Der dritte Ausgang kann das vierte Schaltelement sein oder der dritte Ausgang, insbesondere das dritte Abtriebselement, mit dem vierten Schaltelement verbunden sein. Mit anderen Worten, das vierte Schaltelement kann als der dritte Ausgang ausgebildet sein oder kann der dritte Ausgang sein oder kann mit dem dritten Ausgang, insbesondere dem dritten Abtriebselement, verbunden sein. Vorteilhafterweise kann dadurch eine modulare und/oder kompakte Antriebsvorrichtung realisiert werden. Darüber hinaus können von Vorteil die erste und zweite Übersetzungseinheit unabhängig voneinander austauschbar sein, insbesondere auch auf einfache Art und Weise in die oder aus der Antriebsvorrichtung oder Arbeitsmaschine ein- und ausbaubar sein. Ausserdem können die oben genannten Vorteile der Antriebsvorrichtung realisiert werden.

In Ausgestaltung der Erfindung umfasst die Antriebsvorrichtung einen Motor. Der Motor kann mit dem Antrieb, insbesondere über ein oder mit einem fünften Schaltelement, verbindbar oder verbunden sein. Der Motor kann über den oder durch den Antrieb mit dem ersten Variator verbindbar oder verbunden sein. Der Motor kann als ein Verbrennungsmotor ausgebildet sein. Alternativ oder zusätzlich kann es sich bei dem Motor um einen Elektromotor handeln, insbesondere einen dritten Elektromotor. Der Motor kann mit dem Antrieb, insbesondere über das oder durch das oder mit dem fünften Schaltelement, verbindbar oder verbunden sein. Vorteilhafterweise kann die Antriebsvorrichtung, insbesondere auch die Achse und/oder die Arbeitsmaschine, dadurch modular aufgebaut und/oder hybrid antreibbar sein.

In Ausgestaltung der Erfindung ist der erste Variator als ein erster Elektromotor und der zweite Variator als ein zweiter Elektromotor ausgebildet. Alternativ können der erste und zweite Variator als Hydrostat ausgebildet sein, wobei der Hydrostat insbesondere eine Hydraulikpumpe und einen Hydraulikmotor umfasst. Der erste und zweite Variator können also als Hydraulikpumpe oder Hydraulikmotor ausgebildet und/oder betreibbar sein. Alternativ oder zusätzlich können der erste und/oder zweite Variator als Brennstoffzelle ausgebildet sein. Der erste und/oder zweite Variator, insbesondere der erste und/oder zweite Elektromotor, können mit Gleichstrom und/oder Drehstrom betriebene Synchron- und/oder Asynchronmaschinen mit permanenter und/oder elektrischer Erregung, besonders bevorzugt eine permanenterregte Drehstrom-Synchronmaschinen sein. Der erste und/oder zweite Variator können motorisch und/oder generatorisch betreibbar sein. Der erste und/oder zweite Variator können die Antriebsvorrichtung mit einer Kraft und/oder einer Drehzahl und/oder einem Drehmoment antreiben. Der erste und/oder zweite Variator können jeweils eine Abtriebswelle, insbesondere eine erste und zweite Abtriebswelle umfassen. Der erste Variator kann abtriebsseitig, also insbesondere mit der ersten Abtriebswelle, mit dem Antrieb verbindbar oder verbunden sein. Der zweite Variator kann abtriebsseitig, also insbesondere mit der zweiten Abtriebswelle, mit dem ersten und/oder zweiten und/oder dritten oder dem gemeinsamen Eingang verbindbar oder verbunden sein. Beispielsweise kann ein erster Rotor des ersten Variators, insbesondere des ersten Elektromotors, und/oder ein zweiter Rotor des zweiten Variators, insbesondere des zweiten Elektromotors, mit der jeweiligen Abtriebswelle verbunden sein. Der erste und/oder zweite Variator, insbesondere der erste und/oder zweite Elektromotor, kann als Drehmoment- oder Torquemotor ausgeführt sein. Der erste und/oder zweite Variator können zusätzlich als Generator ausgebildet sein.

Alternativ oder zusätzlich können der erste und zweite Variator als Hydrostat ausgebildet sein. Mit anderen Worten, der erste und zweite Variator können beide zusammen als eine Hydrostateinheit ausgebildet sein. Der erste und zweite Variator können dabei wechselweise als Hydraulikpumpe und Hydraulikmotor ausgebildet sein. Der Hydrostat kann als Eingangselement eine Hydraulikpumpe, insbesondere eine verstellbare Hydraulikpumpe, und als Ausgangselement einen Hydraulikmotor aufweisen. Der Hydraulikmotor kann von der oder durch die oder mit der Hydraulikpumpe antreibbar sein, insbesondere durch eine hydraulische Leistung durch die Hydraulikpumpe antreibbar sein. Die Hydraulikpumpe kann durch eine Kraft und/oder Drehzahl und/oder ein Drehmoment des Motors antreibbar sein. Die Kraft und/oder Drehzahl und/oder das Drehmoment des Hydraulikmotors können in die erste und/oder zweite Übersetzungseinheit und/oder dritte und/oder vierte Übersetzungseinheit eingeleitet werden. Durch Verstellung der Hydraulikpumpe kann die Ausgangsleistung, also insbesondere die Kraft und/oder Drehzahl und/oder das Drehmoment, der Antriebsvorrichtung, insbesondere am Abtrieb eingestellt werden. Die Hydraulikpumpe kann ein Pumpenrad mit verstellbarer Hydraulikgeometrie aufweisen. Alternativ können andere Mitteln zum Verstellen der Hydraulikpumpe vorgesehen sein, mit denen die hydraulische Leistung der Hydraulikpumpe einstellbar ist. Dadurch kann vorteilhafterweise auf einfache konstruktive Art und Weise eine hybride Antriebsvorrichtung realisiert werden.

In Ausgestaltung der Erfindung weisen die erste und/oder zweite Übersetzungseinheit einen Durchgang oder mehrere Durchgänge, insbesondere einen oder mehrere zentrale Durchgänge, für den Antrieb, insbesondere die Eingangswelle, auf. Der Antrieb, insbesondere die Eingangswelle, kann zusätzlich als eine Zapfwellen-Antriebswelle (PTO-Antriebswelle) ausgebildet sein, insbesondere auch verwendbar sein. Der Antrieb, insbesondere die Eingangswelle, und die Zapfwellen-Antriebswelle können als eine Welle, insbesondere eine gemeinsame Welle, ausgebildet sein. Der Antrieb, insbesondere die Eingangswelle, kann als Vollwelle ausgeführt sein. Der Durchgang oder die Durchgänge, insbesondere der oder die zentralen Durchgänge, kann oder können als eine oder mehrere Wellendurchführungen, insbesondere eine oder mehrere zentrale Wellendurchführungen, für den Antrieb, insbesondere die Eingangswelle, ausgebildet sein. Die erste und/oder zweite Übersetzungseinheit können also eine oder mehrere Wellendurchführung, insbesondere eine oder mehrere zentrale Wellendurchführung, für den Antrieb, insbesondere die Eingangswelle, aufweisen. Die erste Sonne des ersten Planetengetriebes und/oder die zweite Sonne des zweiten Planetengetriebes und/oder die erste und/oder zweite und/oder dritte Stirnradstufe können jeweils Durchgänge, insbesondere Wellendurchführungen, für den Antrieb, insbesondere die Eingangswelle, aufweisen. Auf diese Weise ist eine direkte und damit besonders energieeffiziente Übertragung des Drehmoments und/oder der Kraft und/oder der Drehzahl zum ersten Leistungsausgang der Antriebsvorrichtung oder Arbeitsmaschine möglich.

In Ausgestaltung der Erfindung ist der erste Variator und/oder der Motor mit dem ersten Leistungsausgang verbindbar oder verbunden, insbesondere mit einem sechsten oder durch ein sechstes Schaltelement mit dem ersten Leistungsausgang verbindbar oder verbunden. Der erste Leistungsausgang kann eine Zapfwelleneinheit umfassen oder als Zapfwelleneinheit ausgebildet sein. Die Zapfwelleneinheit kann ein Zapfwellengetriebe und/oder eine Zapfwelle umfassen. Der erste Variator und/oder der Motor können über den Antrieb, insbesondere die Eingangswelle, mit dem sechsten Schaltelement verbunden sein. Das sechste Schaltelement mit dem ersten Leistungsausgang, insbesondere dem Zapfwellengetriebe und/oder der Zapfwelle, verbunden sein. Das sechste Schaltelement kann den Antrieb, insbesondere die Eingangswelle, mit dem ersten Leistungsausgang, insbesondere dem Zapfwellengetriebe und/oder der Zapfwelle, verbinden. Der erste Leistungsausgang, bevorzugt die Zapfwelleneinheit, besonders bevorzugt das Zapfwellengetriebe, kann also antriebsseitig, insbesondere über oder durch das sechste Schaltelement, mit dem Antrieb, insbesondere der Eingangswelle, und/oder der Zapfwellen-Antriebswelle verbindbar oder verbunden sein. Ausserdem kann der erste Leistungsausgang, bevorzugt die Zapfwelleneinheit, besonders bevorzugt das Zapfwellengetriebe, abtriebsseitig mit der Zapfwelle verbindbar oder verbunden sein. Der erste Leistungsausgang ist mit dem ersten Variator und/oder dem Motor antreibbar. Dadurch kann vorteilhafterweise eine kompakte und/oder modulare und/oder konstruktiv einfache Ausgestaltung der Antriebsvorrichtung, insbesondere des ersten Leistungsausgangs, erreicht werden.

In Ausgestaltung der Erfindung ist der Abtrieb und/oder die erste und/oder zweite Übersetzungseinheit mit einer Vorgelegewelle verbindbar oder verbunden. Die erste Übersetzungseinheit, bevorzugt der erste und/oder zweite Ausgang, besonders bevorzugt die erste und/oder zweite Stirnradstufe oder der erste Planetenträger des ersten Planetengetriebes, kann direkt oder über eine oder mit einer oder durch eine dritte Übersetzungsstufe, beispielsweise eine siebte Stirnradstufe oder ein drittes Zahnradpaar oder drei oder mehr Zahnräder oder ein fünftes Planetengetriebe oder ein Getriebe, mit der Vorgelegewelle und/oder dem Abtrieb, insbesondere über den Abtrieb, verbindbar oder verbunden sein. Alternativ oder zusätzlich kann aber auch der zweite Variator und/oder die zweite Übersetzungseinheit, bevorzugt die dritte und/oder vierte Stirnradstufe über das oder mit dem oder durch das vierte Schaltelement mit der Vorgelegewelle verbindbar oder verbunden sein. Die Vorgelegewelle kann eine Vollwelle sein. Die Vorgelegewelle und/oder der Antrieb, insbesondere die Eingangswelle, und/oder der Abtrieb, insbesondere die Ausgangswelle können koaxial zueinander angeordnet sein. Ausserdem kann die Vorgelegewelle mit dem Fahrantrieb, insbesondere dem Vorderachsantrieb, verbunden sein. Die Vorgelegewelle kann mit einer vierten oder über eine vierte Übersetzungsstufe, beispielsweise eine achte Stirnradstufe oder ein viertes Zahnradpaar oder drei oder mehr Zahnräder oder ein sechstes Planetengetriebe oder ein sonstiges Getriebe, und/oder einem weiteren Schaltelement mit einer weiteren Welle verbindbar oder verbunden sein. Die Vorgelegewelle oder die weitere Welle kann mit dem ersten Differenzialgetriebe oder dem Vorderachsdifferenzial verbunden sein. Dadurch kann vorteilhafterweise eine kompakte und konstruktiv einfach ausgestaltete Anordnung der Antriebsvorrichtung realisiert werden.

In Ausgestaltung der Erfindung umfasst die Antriebsvorrichtung oder die Achse oder die Arbeitsmaschine eine Steuereinheit. Die Steuereinheit ist oben und unten im Detail beschrieben.

Die Erfindung betrifft weiter eine Achse, insbesondere für eine Arbeitsmaschine, umfassend eine Antriebsvorrichtung, insbesondere eine Antriebsvorrichtung nach einem der Ansprüche 1 bis 9. Die Antriebsvorrichtung kann an der Achse angeordnet oder in die Achse integriert sein.

Die Erfindung betrifft weiter eine Getriebegehäuseanordnung mit einer Antriebsvorrichtung, insbesondere einer Antriebsvorrichtung nach einem der Ansprüche 1 bis 9. Die Getriebegehäuseanordnung umfasst ein erstes Gehäusemodul mit der ersten Übersetzungseinheit, wobei das erste Gehäusemodul eine eingangsseitige Gehäusewand und eine ausgangsseitigen Gehäusewand aufweist. Die eingangsseitige und ausgangsseitige Gehäusewand des ersten Gehäusemoduls können jede Gehäusewand des ersten Gehäusemoduls sein. Die eingangsseitige Gehäusewand des ersten Gehäusemoduls weist mindestens eine erste Eingangsöffnung, insbesondere eine erste und zweite Eingangsöffnung auf. Die erste Eingangsöffnung, insbesondere die erste und zweite Eingangsöffnung, können zum Anbinden und/oder Verbinden der Eingänge der ersten Übersetzungseinheit ausgebildet sein, insbesondere zum Anbinden und/oder Verbinden der Eingänge der ersten Übersetzungseinheit mit dem zweiten Variator. Die ausgangsseitige Gehäusewand des ersten Gehäusemoduls weist eine erste Ausgangsöffnung auf. Die erste Ausgangsöffnung kann zum Anbinden und/oder Verbinden des ersten Ausgangs der ersten Übersetzungseinheit mit dem Abtrieb ausgebildet sein. Die Arbeitsmaschine kann die Getriebegehäuseanordnung umfassen.

In der ersten Eingangsöffnung der eingangsseitigen Gehäusewand des ersten Gehäusemoduls kann oder können der erste und zweite Eingang oder der gemeinsame Eingang angeordnet sein. Im Speziellen können sich der erste und zweite Eingang, insbesondere das erste und zweite Antriebselement, oder der gemeinsame Eingang, insbesondere das gemeinsame Antriebselement, durch die erste Eingangsöffnung erstrecken, sodass diese insbesondere mit dem zweiten Variator verbindbar sind. In der ersten Eingangsöffnung kann aber auch der erste Eingang und in der zweiten Eingangsöffnung der zweite Eingang angeordnet sein. Im Speziellen kann sich der erste Eingang, insbesondere das erste Antriebselement, durch die erste Eingangsöffnung erstrecken und der zweite Eingang, insbesondere das zweite Antriebselement, durch die zweite Eingangsöffnung erstrecken, sodass diese insbesondere mit dem zweiten Variator verbindbar sind. In der ersten Ausgangsöffnung der ausgangsseitigen Gehäusewand des ersten Gehäusemoduls kann der Abtrieb, insbesondere die Ausgangswelle, angeordnet sein. Im Speziellen kann sich der Abtrieb, insbesondere die Ausgangswelle, durch die erste Ausgangsöffnung erstrecken.

Im Speziellen kann die erste Übersetzungseinheit im ersten Gehäusemodul angeordnet sein. Im ersten Gehäusemodul können ausserdem der erste Variator und/oder die erste Übersetzungsstufe und/oder zumindest teilweise die Vorgelegewelle und/oder zumindest teilweise der Abtrieb angeordnet sein. Die Vorgelegewelle kann in der ersten Eingangsöffnung oder einer dritten Eingangsöffnung der eingangsseitigen Gehäusewand des ersten Gehäusemoduls angeordnet sein. Im Speziellen kann sich die Vorgelegewelle durch die erste oder dritte Eingangsöffnung erstrecken. Das erste Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die erste Übersetzungseinheit, insbesondere Komponenten der ersten Übersetzungseinheit, lagerbar sein. Zusätzlich können der erste Variator und/oder die erste Übersetzungsstufe und/oder zumindest teilweise die Vorgelegewelle und/oder zumindest teilweise der Abtrieb können an und/oder auf und/oder in den Lagerstellen lagerbar sein.

Die eingangsseitige oder eine weitere eingangsseitige und die ausgangsseitige oder eine weitere ausgangsseitige Gehäusewand des ersten Gehäusemoduls können eine erste und zweite Durchgangsöffnung, insbesondere zentrale erste und zweite Durchgangsöffnungen, für den Antrieb, insbesondere die Eingangswelle, aufweisen. Die eingangsseitige und ausgangsseitige Gehäusewand des ersten Gehäusemoduls können aber auch als eine gemeinsame Gehäusewand des ersten Gehäusemoduls, insbesondere eine erste gemeinsame Gehäusewand, ausgebildet sein. Die gemeinsame Gehäusewand des ersten Gehäusemoduls kann mindestens die erste Eingangsöffnung, insbesondere die erste und zweite und/oder dritte Eingangsöffnung, und die erste Ausgangsöffnung, und insbesondere eine gemeinsame Durchgangsöffnung umfassen. Wesentlich ist, dass sich durch die Eingangsöffnungen des ersten Gehäusemoduls die Eingänge oder deren Antriebselemente und durch die Ausgangsöffnung der Abtrieb erstrecken. Vorteilhafterweise kann die Gehäuseanordnung dadurch auf einfache Art und Weise anbindbar sein und/oder modular aufgebaut sein.

In Ausgestaltung der Erfindung umfasst die Getriebegehäuseanordnung ein zweites Gehäusemodul mit der zweiten Übersetzungseinheit, wobei das zweite Gehäusemodul eine eingangsseitige Gehäusewand und eine ausgangsseitigen Gehäusewand aufweist, und die eingangsseitige Gehäusewand des zweiten Gehäusemoduls mindestens eine weitere, insbesondere eine vierte Eingangsöffnung, zum Anbinden und/oder Verbinden der Eingänge der zweiten Übersetzungseinheit aufweist, und die ausgangsseitige Gehäusewand des zweiten Gehäusemoduls eine zweite Ausgangsöffnung zum Anbinden und/oder Verbinden der zweiten Übersetzungseinheit mit dem Abtrieb aufweist.

In der weiteren Eingangsöffnung, insbesondere vierten Eingangsöffnung, der eingangsseitigen Gehäusewand des zweiten Gehäusemoduls kann der dritte Eingang oder der gemeinsame Eingang angeordnet sein. Im Speziellen können sich der dritte Eingang, insbesondere das dritte Antriebselement, oder der gemeinsame Eingang, insbesondere das gemeinsame Antriebselement, durch die weitere Eingangsöffnung, insbesondere vierten Eingangsöffnung, erstrecken, sodass diese insbesondere mit dem zweiten Variator verbindbar sind. In der zweite Ausgangsöffnung der ausgangsseitigen Gehäusewand des zweiten Gehäusemoduls kann die Vorgelegewelle angeordnet sein. Im Speziellen kann sich die Vorgelegewelle durch die zweite Ausgangsöffnung erstrecken.

Im Speziellen kann die zweite Übersetzungseinheit im zweiten Gehäusemodul angeordnet sein. Im zweiten Gehäusemodul können ausserdem der zweite Variator und/oder die zweite Übersetzungsstufe und/oder zumindest teilweise die Vorgelegewelle angeordnet sein. Die Vorgelegewelle kann in der zweiten Ausgangsöffnung und/oder einer fünften Eingangsöffnung der eingangsseitigen Gehäusewand des zweiten Gehäusemoduls angeordnet sein. Im Speziellen kann sich die Vorgelegewelle durch die zweite Ausgangsöffnung und/oder die fünfte Eingangsöffnung erstrecken. Das zweite Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die zweite Übersetzungseinheit, insbesondere Komponenten der zweiten Übersetzungseinheit, lagerbar sein. Zusätzlich können der zweite Variator und/oder die zweite Übersetzungsstufe und/oder zumindest teilweise die Vorgelegewelle an und/oder auf und/oder in den Lagerstellen lagerbar sein. Insbesondere auch hier wird der geringe Montageaufwand und hohe Grad an Kompatibilität und Variabilität gegenüber herkömmlichen Getriebegehäuseanordnungen deutlich.

Die eingangsseitige oder eine weitere eingangsseitige Gehäusewand des zweiten Gehäusemoduls können eine dritte Durchgangsöffnung, insbesondere eine zentrale dritte Durchgangsöffnung, für den Antrieb, insbesondere die Eingangswelle, aufweisen. Die ausgangsseitige oder eine weitere ausgangsseitige Gehäusewand des zweiten Gehäusemoduls können eine vierte Durchgangsöffnung, insbesondere eine zentrale vierte Durchgangsöffnung, für den Antrieb, insbesondere die Eingangswelle, aufweisen. Die eingangsseitige und ausgangsseitige Gehäusewand des zweiten Gehäusemoduls können aber auch als eine gemeinsame Gehäusewand des zweiten Gehäusemoduls, insbesondere eine zweite gemeinsame Gehäusewand, ausgebildet sein. Die gemeinsame Gehäusewand des zweiten Gehäusemoduls kann mindestens die vierte Eingangsöffnung, insbesondere die vierte und fünfte Eingangsöffnung, und die zweite Ausgangsöffnung, und insbesondere eine weitere gemeinsame Durchgangsöffnung umfassen. Auf diese Weise ist eine direkte und damit besonders energieeffiziente Übertragung des Drehmoments und/oder der Kraft und/oder der Drehzahl zu einem ersten Leistungsausgang der Antriebsvorrichtung oder Achse oder Arbeitsmaschine möglich.

Ebenso können die eingangsseitige Gehäusewand des ersten Gehäusemoduls und die ausgangsseitige Gehäusewand des zweiten Gehäusemoduls als eine gemeinsame Gehäusewand des ersten und zweiten Gehäusemoduls ausgebildet sein. Die gemeinsame Gehäusewand des ersten und zweiten Gehäusemoduls kann als gemeinsame Öffnungen die erste und/oder zweite und/oder gemeinsame Eingangsöffnung und die zweite Ausgangsöffnung und/oder die erste Durchgangsöffnung umfassen.

Das erste Gehäusemodul kann mit dem zweiten Gehäusemodul verbindbar sein, bevorzugt die ausgangsseitige Gehäusewand des zweiten Gehäusemoduls und die eingangsseitige Gehäusewand des ersten Gehäusemoduls miteinander verbindbar oder verbunden sein. Das erste und zweite Gehäusemodul können mit oder durch eine oder mehrere Befestigungsflächen und Gehäuseflansche miteinander verbunden, bevorzugt aneinander befestigt, besonders bevorzugt lösbar aneinander befestigt sein. Dabei kann das erste Gehäusemodul eine oder mehrere Befestigungsflächen und das zweite Gehäusemodul eine oder mehrere Gehäuseflansche umfassen. Ebenso kann auch umgekehrt das erste Gehäusemodul eine oder mehrere Gehäuseflansche und das zweite Gehäusemodul eine oder mehrere Befestigungsflächen umfassen. Alternativ können das erste und zweite Gehäusemodul mehrere Gehäuseflansche und mehrere Befestigungsflächen umfassen.

Die Eingangsöffnungen und/oder Ausgangsöffnungen und/oder Durchgangsöffnungen können beispielsweise Öffnungen oder Löcher oder Durchgänge für die Eingänge und Ausgänge der ersten und zweiten Übersetzungseinheiten und den Abtrieb, und insbesondere den Antrieb und/oder die Vorgelegewelle sein. Im Speziellen können die Eingangsöffnungen und/oder Ausgangsöffnungen und/oder Durchgangsöffnungen jeweils Wellendurchführungen, insbesondere zentrale Wellendurchführungen, ausgebildet sein. Insbesondere die erste und zweite Übersetzungseinheit können dadurch über die Eingangsöffnungen und/oder Ausgangsöffnungen miteinander verbindbar sein. Die Eingangs- und/oder Ausgangsöffnungen können auch als Durchgangsöffnungen ausgebildet sein.

Weitere Anschlussmöglichkeiten für weitere Gehäusemodule können an der Gehäusewand des ersten und/oder zweiten Gehäusemoduls vorgesehen sein, um beispielsweise das erste und/oder zweite Differenzialgetriebe oder den ersten Leistungsausgang an die sich durch die ausgangsseitige Gehäusewand des ersten Gehäusemoduls erstreckenden Antrieb und/oder Abtrieb anschließen zu können.

Die Getriebegehäuseanordnung kann somit vorteilhafterweise modular aufgebaut sein. Modular soll in diesem Zusammenhang bedeuten, dass die Getriebegehäuseanordnung aus mehreren Gehäusemodulen zusammengesetzt ist und für jede der oben beschriebenen Übersetzungseinheiten ein Gehäusemodul ausgebildet ist, welches im Zusammenbau mit den anderen Gehäusemodulen die gesamte Getriebegehäuseanordnung darstellt. Die benachbarten und/oder aneinander anliegenden Gehäusewände können dabei als gemeinsame Gehäusewände ausgebildet sein. Eine derartige Anordnung ermöglicht, dass sich ein Wechsel der ersten und/oder zweiten Übersetzungseinheit leicht und kostengünstig ausführen lässt, ohne die gesamte Antriebsvorrichtung komplett demontieren zu müssen. Hier werden die Vorteile einer Getriebeanordnung im Hinblick auf einen geringeren Montageaufwand, hohen Grad an Kompatibilität und Variabilität deutlich. Im Weiteren kann vorteilhafterweise kann durch die Getriebegehäuseanordnung die Antriebsvorrichtung modular angeordnet und/oder modular aufgebaut sein.

In Ausgestaltung der Erfindung sind das erste und zweite Gehäusemodule entlang einer Längsachse der Getriebegehäuseanordnung, und insbesondere einer Längsachse der Arbeitsmaschine, angeordnet. Die Längsachse der Getriebegehäuseanordnung und die Längsachse der Arbeitsmaschine können identisch oder parallel sein.

Die Erfindung betrifft weiter eine Arbeitsmaschine mit einer Achse, insbesondere einer Achse nach Anspruch 10, oder eine Antriebsvorrichtung, insbesondere eine Antriebsvorrichtung nach einem der Ansprüche 1 bis 9, oder eine Getriebegehäuseanordnung, insbesondere eine Getriebegehäuseanordnung nach einem der Ansprüche 11 bis 13. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile der Antriebsvorrichtung und/oder Getriebegehäuseanordnung auf.

Die Arbeitsmaschine umfasst die Antriebsvorrichtung und/oder die Achse und/oder die Getriebegehäuseanordnung. Die Antriebsvorrichtung ist zum Antreiben der Arbeitsmaschine ausgebildet. Die Arbeitsmaschine kann eine, zwei oder mehrere Achse(n) umfassen. Im Speziellen kann die Antriebsvorrichtung an oder in die Achse, insbesondere in die erste und/oder zweite Fahrzeugachse integriert sein. Die Arbeitsmaschine kann mit einer Drehzahl und/oder Kraft und/oder einem Drehmoment des ersten und/oder zweiten Variators und/oder Motors antreibbar sein.

Die Steuereinheit kann zur Steuerung und/oder Regelung, insbesondere zum Einstellen und/oder Verstellen, der Arbeitsmaschine, insbesondere des Motors und/oder des ersten und/oder zweiten Variators eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen.

Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik des Antriebsvorrichtung sein. Die Arbeitsmaschine kann anstatt der Antriebsvorrichtung den ersten Leistungsausgang, insbesondere die Zapfwelleneinheit umfassen. Die Steuereinheit kann konfiguriert sein, die Antriebsvorrichtung und/oder die Achse und/oder Arbeitsmaschine mit einem Fahrsignal einzustellen und/oder zu verstellen und/oder anzusteuern und mit dem oder basierend auf dem Fahrsignal eine Geschwindigkeit der Arbeitsmaschine einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine, insbesondere ein erstes und zweites Rahmenelement, kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein. Die Arbeitsmaschine kann einen Geschwindigkeitssensor, beispielsweise einen Drehzahlsensor, zur Erfassung einer Geschwindigkeit der Arbeitsmaschine umfassen. Im Speziellen kann die Steuereinheit konfiguriert sein, eine Kraft und/oder ein Drehmoment und/oder eine Drehzahl des Motors und/oder des ersten und/oder zweiten Variators mit dem Fahrsignal einzustellen und/oder zu verstellen und/oder anzusteuern.

In Ausgestaltung der Erfindung umfasst die Arbeitsmaschine zwei Rahmenelemente, insbesondere ein erstes und ein zweites Rahmenelement. Die die Antriebsvorrichtung, bevorzugt die Getriebegehäuseanordnung, besonders bevorzugt das erste und/oder zweite Gehäusemodul, ist an, insbesondere zwischen, den Rahmenelementen angeordnet. Die Rahmenelemente, insbesondere das erste und zweite Rahmenelement, können parallel zur Längsachse der Arbeitsmaschine angeordnet sein. Die Getriebegehäuseanordnung, insbesondere das erste und zweite Gehäusemodule, können entlang der Längsachse der Arbeitsmaschine angeordnet sein. Die Längsachse der Getriebegehäuseanordnung und die Längsachse der Arbeitsmaschine können identisch oder parallel sein. Das erste und/oder zweite Gehäusemodul können zwischen den Rahmenelementen angeordnet sein, insbesondere auch an diesen befestigt und/oder gelagert sein. Ebenso kann die Zapfwelleneinheit an den Rahmenelementen angeordnet sein, insbesondere an diesen befestigt und/oder gelagert sein.

Die Schaltelemente, insbesondere deren Ventile oder Ventileinrichtungen oder Aktuatoren, und/oder der Energiespeicher und/oder die Leistungselektronik und/oder den ersten und/oder zweiten Variator und/oder der Motor und/oder der erste Leistungsausgang, insbesondere die Zapfwelleneinheit, können mit der Steuereinheit ansteuerbar und/oder einstellbar und/oder verstellbar, bevorzugt steuerbar und/oder regelbar sein. Die Steuereinheit kann Signale zur Steuerung des Betriebs der Antriebsvorrichtung und/oder der Achse und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS- und/oder CAN-Standard entspricht. Die Steuereinheit kann als ein elektronisches Modul, ein eingebettetes System, eine Recheneinheit, ein Computer, als ein Modul zum Steuern und/oder Regeln der Antriebsvorrichtung und/oder der Achse und/oder der Arbeitsmaschine ausgebildet sein. Die Steuereinheit kann einen oder mehrere Prozessoren, einen Speicher und/oder alle Software, Hardware, Algorithmen, Anschlüsse, insbesondere auch Sensoren, umfassen, die für die Steuerung und/oder Regelung der Antriebsvorrichtung und/oder der Achse und/oder der Arbeitsmaschine erforderlich sind. Verfahren können als Programm oder Algorithmus ausgebildet sein, welche auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsvorrichtung und/oder der Achse und/oder der Arbeitsmaschine und die erforderlichen Aufgaben zur Steuerung und/oder Regelung des Betriebs der Antriebsvorrichtung und/oder der Achse und/oder der Arbeitsmaschine, zu steuern und/oder zu regeln und/oder auszuführen. Die Steuereinheit kann mit den Bauteilen der Antriebsvorrichtung und/oder der Achse und/oder der Arbeitsmaschine, also insbesondere dem ersten Leistungsausgang und/oder den Schaltelementen, insbesondere den Ventilen oder Ventileinrichtungen oder Aktuatoren der Schaltelemente und/oder der Energiespeicher und/oder die Leistungselektronik und/oder der erste und/oder zweite Variator und/oder der Motor und/oder den Sensoren, beispielsweise der Geschwindigkeitssensor und/oder der oder den Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsvorrichtung und/oder der Achse und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnlichem erfolgen. Die Steuereinheit kann unmittelbar mit, insbesondere mit der in einer Kabine der Arbeitsmaschine angeordneten, Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Arbeitsmaschine mit einer erfindungsgemässen Antriebsvorrichtung, und
- Fig. 2: eine schematische Darstellung eines ersten Ausführungsbeispiels der erfindungsgemässen Antriebsvorrichtung, und
- Fig. 3: eine schematische Darstellung eines zweiten Ausführungsbeispiels der erfindungsgemässen Antriebsvorrichtung, und
- Fig. 4: eine schematische Darstellung eines dritten Ausführungsbeispiels der erfindungsgemässen Antriebsvorrichtung, und
- Fig. 5: eine schematische Darstellung eines vierten Ausführungsbeispiels der erfindungsgemässen Antriebsvorrichtung, und
- Fig. 6: eine schematische Darstellung eines weiteren Ausführungsbeispiels der ersten Übersetzungseinheit, und
- Fig. 7: eine schematische Darstellung eines weiteren Ausführungsbeispiels der ersten Übersetzungseinheit, und
- Fig. 8: eine schematische Darstellung eines weiteren Ausführungsbeispiels der zweiten Übersetzungseinheit, und
- Fig. 9: eine schematische Darstellung eines ersten Ausführungsbeispiel einer erfindungsgemässen Getriebegehäuseanordnung, und
- Fig. 10: eine schematische Darstellung eines zweiten Ausführungsbeispiel einer erfindungsgemässen Getriebegehäuseanordnung, und
- Fig. 11: eine schematische Darstellung eines dritten Ausführungsbeispiel einer erfindungsgemässen Getriebegehäuseanordnung, und
- Fig. 12: eine schematische Darstellung eines vierten Ausführungsbeispiel einer erfindungsgemässen Getriebegehäuseanordnung, und
- Fig. 13: eine schematische Darstellung eines fünften Ausführungsbeispiel einer erfindungsgemässen Getriebegehäuseanordnung, und
- Fig. 14: eine schematische Darstellung eines sechsten Ausführungsbeispiel einer erfindungsgemässen Getriebegehäuseanordnung, und
- Fig. 15: eine schematische Darstellung eines siebten Ausführungsbeispiel einer erfindungsgemässen Getriebegehäuseanordnung, und
- Fig. 16: eine schematische Darstellung eines achten Ausführungsbeispiel einer erfindungsgemässen Getriebegehäuseanordnung, und
- Fig. 17: eine schematische Darstellung eines weiteren Ausführungsbeispiels einer erfindungsgemässen Arbeitsmaschine mit einer erfindungsgemässen Getriebegehäuseanordnung und Antriebsvorrichtung.

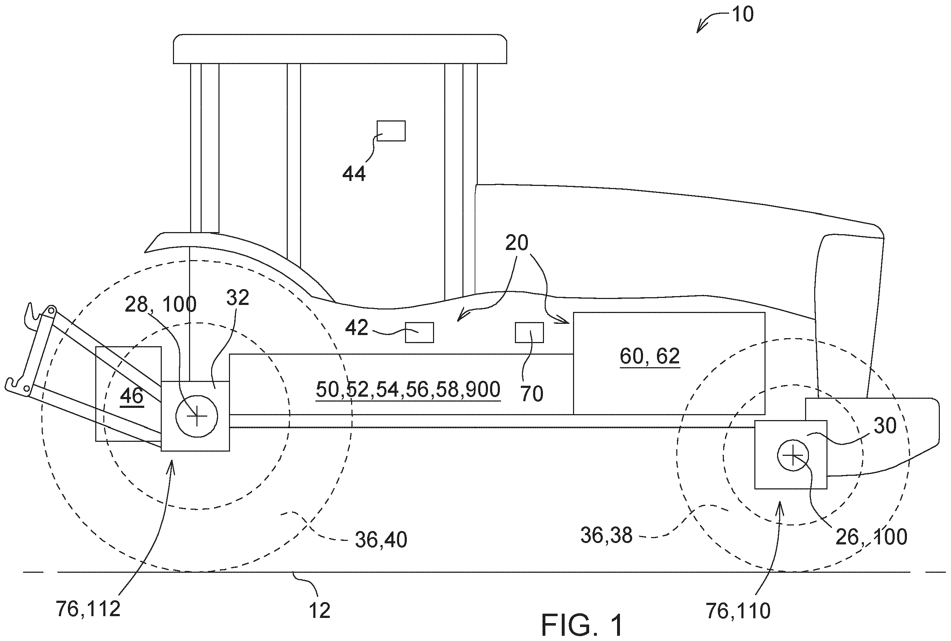

Figur 1 zeigt eine schematische Darstellung eines ersten Ausführungsbeispiels einer erfindungsgemässen Arbeitsmaschine 10, hier eines landwirtschaftlichen Zugfahrzeugs oder Traktors bzw. Schleppers, mit einer erfindungsgemässen Antriebsvorrichtung 20. Die Arbeitsmaschine 10 ist mit der Antriebsvorrichtung 20 antreibbar.

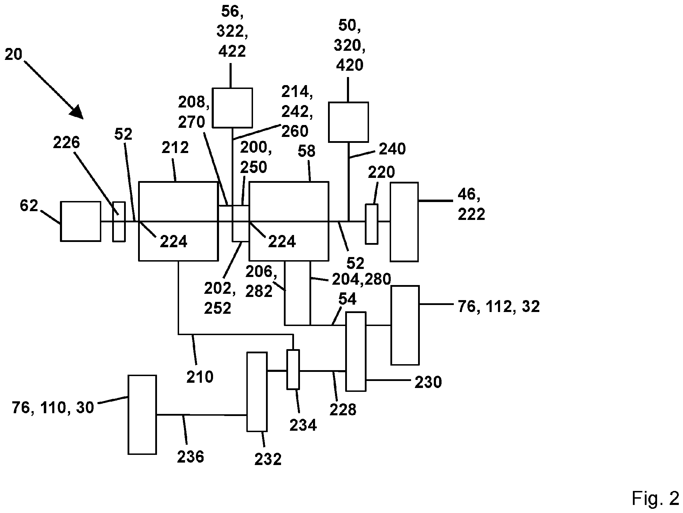

Die Antriebsvorrichtung 20 umfasst einen Antrieb 52, der insbesondere als Antriebswelle oder Eingangswelle ausgebildet sein kann, und einen Abtrieb 54, der insbesondere als eine Abtriebswelle oder Ausgangswelle ausgebildet sein kann, und einen ersten und zweiten Variator 50, 56, und eine erste Übersetzungseinheit 58. Die erste Übersetzungseinheit 58 weist einen ersten und zweiten Eingang 200, 202 (siehe Figuren 2 bis 8) und mindestens einen ersten Ausgang 204 auf (siehe Figuren 2 bis 8). Die erste Übersetzungseinheit 58 kann zusätzlich einen zweiten Ausgang 206 aufweisen (siehe Figuren 2 bis 8). Der zweite Variator 56 ist mit dem Abtrieb 54 über die erste Übersetzungseinheit 58 verbindbar oder verbunden. Ausserdem ist der erste Variator 50 mit dem Antrieb 52 verbunden. Der zweite Variator 56 ist mit ersten Eingang 200 und dem zweiten Eingang 202 verbunden.

Die Arbeitsmaschine 10, insbesondere die Antriebsvorrichtung 20, umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Die Arbeitsmaschine 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich die Arbeitsmaschine 10 auf dem Untergrund 12 abstützt. Die Arbeitsmaschine 10, insbesondere die Antriebsvorrichtung 20, kann einen Fahrantrieb 76, insbesondere einen Vorderachsantrieb 110 und einen Hinterachsantrieb 112 umfassen. Der Fahrantrieb 76 kann die erste Fahrzeugachse 26 und/oder die zweite Fahrzeugachse 28 und/oder ein erstes Differenzialgetriebe 30 und/oder ein zweites Differenzialgetriebe 32 und/oder das oder die Bodeneingriffsmittel 36 umfassen. Die Arbeitsmaschine 10, insbesondere die Antriebsvorrichtung 20, kann einen Vorderachsantrieb 110 aufweisen, der die erste Fahrzeugachse 26 und/oder das erste Differenzialgetriebe 30, also insbesondere ein Vorderachsdifferenzial, und/oder das oder die Bodeneingriffsmittel 36 umfassen kann. Ebenso kann die Arbeitsmaschine 10, oder insbesondere die Antriebsvorrichtung 20, einen Hinterachsantrieb 112 aufweisen, der die zweite Fahrzeugachse 28 und/oder das zweite Differenzialgetriebe 32, also insbesondere ein Hinterachsdifferenzial, und/oder das oder die Bodeneingriffsmittel 36 umfassen kann. Die erste Fahrzeugachse 26 kann mit dem ersten Differenzialgetriebe 30 verbunden sein. Die zweite Fahrzeugachse 28 kann mit dem zweiten Differenzialgetriebe 32 verbunden sein.

Der Abtrieb 54 kann mit dem Fahrantrieb 76, insbesondere dem ersten und/oder zweiten Differenzialgetriebe 30, 32, insbesondere nur mit dem zweiten Differenzialgetriebe 32, verbunden sein. Der Abtrieb 54 kann über das zweite oder mit dem zweiten Differenzialgetriebe 32 mit der zweiten Fahrzeugachse verbunden sein. Über das erste oder mit dem ersten Differenzialgetriebe 30 und/oder das zweite oder mit dem zweiten Differenzialgetriebe 32 kann eine Kraft und/oder ein Drehmoment und/oder eine Drehzahl vom Abtrieb 54 an die erste und/oder zweite Fahrzeugachse 26, 28, und somit insbesondere an die Bodeneingriffsmittel 36, übertragbar sein.

Der erste und/oder zweite Variator 50, 56 können insbesondere als erster und zweiter Elektromotor ausgeführt sein. Alternativ oder zusätzlich können der erste und zweite Variator 50, 56 als Hydrostat ausgeführt sein. Die Antriebsvorrichtung oder die Arbeitsmaschine kann einen Motor 62 umfassen. Der Motor kann mit dem Antrieb 52 verbindbar oder verbunden sein. Ebenso kann der Motor 62 über den oder durch den Antrieb 52 mit dem ersten Variator 50 verbindbar oder verbunden sein.

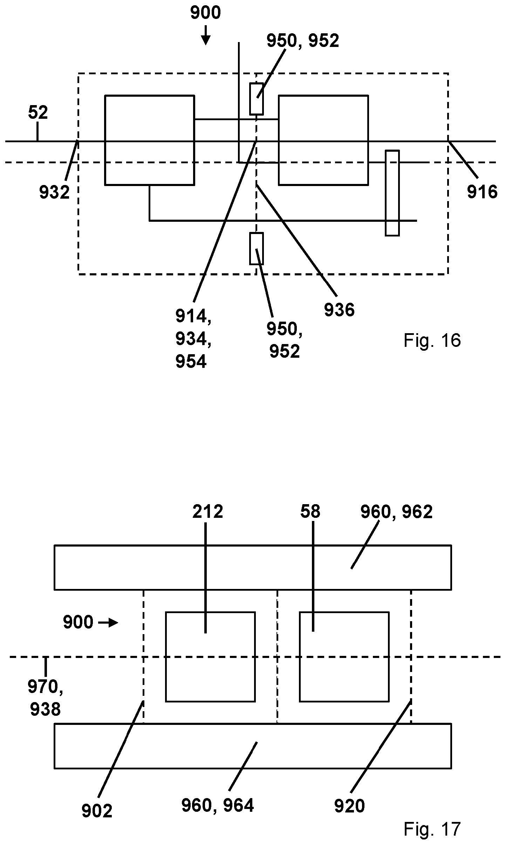

Mit der Antriebsvorrichtung 20, insbesondere dem Motor 62 und/oder dem ersten und/oder zweiten Variator 50, 56, kann eine Drehbewegung und/oder Kraft und/oder ein Drehmoment und/oder eine Drehzahl erzeugbar und, insbesondere über die erste und/oder eine zweite Übersetzungseinheit 58, 212, auf den Abtrieb 54, auf die erste und/oder zweite Fahrzeugachse 26, 28 übertragbar sein. Die erste und/oder zweite Fahrzeugachse 26, 28 wandeln die Drehbewegung und/oder Kraft und/oder das Drehmoment und/oder die Drehzahl in eine Drehbewegung und/oder Kraft und/oder ein Drehmoment und/oder Drehzahl eines oder mehrerer Bodeneingriffsmittel 36 und somit in einen Schub der Arbeitsmaschine 10 um. Die Arbeitsmaschine 10 kann ausserdem ein Zugfahrzeugrahmen, insbesondere ein erstes und zweites Rahmenelement 960, 962, 964 (siehe Figur 17) aufweisen, dieser insbesondere von den an der ersten und/oder zweiten Fahrzeugachse 28, 30 aufgehängten Bodeneingriffsmitteln 36, insbesondere den Rädern 38, 40 getragen werden kann. Im Speziellen sind ein erstes Paar Räder 38 an der ersten Fahrzeugachse 26 und ein zweites Paar Räder 40 an der zweiten Fahrzeugachse 28 angeordnet sein. Dabei können die Durchmesser der Rädern 38, 40 voneinander abweichen, insbesondere kann der Durchmesser des ersten Paars Räder 38 kleiner als der Durchmesser des zweiten Paars Räder 40 sein. Alternativ können die Bodeneingriffsmittel 36 auch als Raupen oder Ketten ausgebildet und angeordnet sein.

Ausserdem kann die Arbeitsmaschine 10, alternativ oder zusätzlich die Antriebsvorrichtung 20 oder eine Achse 100, eine Leistungselektronik 70 umfassen, um die elektrische Leistung bzw. Energie zwischen dem ersten und zweiten Variator 50, 56, insbesondere dem ersten und zweiten Elektromotor, und einem Energiespeicher 60 zu übertragen. Die Arbeitsmaschine 10 kann in der dargestellten Ausführungsform mit dem Motor 62 und/oder hybrid und/oder elektrisch und/oder hydraulisch angetrieben sein. Die Arbeitsmaschine 10, insbesondere die Antriebsvorrichtung 20, kann einen ersten Leistungsausgang 46 umfassen. Der erste Leistungsausgang kann eine Zapfwelleneinheit 222 umfassen. Der erste Leistungsausgang 46 kann zum Antreiben eines Arbeitsgeräts (nicht gezeigt) vorgesehen sein, das über eine Schnittstelle (z.B. Dreipunktschnittstelle) an der Arbeitsmaschine 10 anbringbar ist. Im Speziellen kann eine Achse 100 die Antriebsvorrichtung 20 umfassen oder die Antriebsvorrichtung 20 an oder in dieser angeordnet sein, beispielsweise an der ersten und/oder zweiten Fahrzeugachse 26, 28. Der Energiespeicher 60 kann die elektrisch angetriebenen Komponenten der Antriebsvorrichtung 20, bevorzugt den ersten und/oder zweiten Variator 50, 56, besonders bevorzugt den ersten und/oder zweiten Elektromotor, mit Strömen bzw. Spannungen geeigneter Frequenz und Amplituden versorgen, um vorgebbare Drehzahlen und/oder Drehmomente für die Antriebsvorrichtung 20 bereitzustellen.

Die Arbeitsmaschine 10, insbesondere alternativ oder zusätzlich die Achse 100 oder die Antriebsvorrichtung 20, kann eine Steuereinheit 42 und/oder eine Ein- und Ausgabeeinheit 44 umfassen. Die Steuereinheit 42 kann mit der Ein- und Ausgabeeinheit 44 signalverbunden und/oder wirkend gekoppelt und/oder signalübertragend und/oder datenleitend verbunden sein. Im Speziellen kann die Steuereinheit 42 unmittelbar mit der in einer Kabine der Arbeitsmaschine 10 angeordneten Ein- und Ausgabeeinheit 44 Verbindung stehen, durch welche von einer Bedienperson eingegebene Daten an die Steuereinheit 42 übertragen oder von dieser empfangen und ausgegeben werden können. Die Antriebsvorrichtung 20, und/oder insbesondere die Arbeitsmaschine 10 oder die Achse 100, kann mit der Steuereinheit 42 einstellbar und/oder verstellbar sein. Die Steuereinheit 42 ist mit dem Motor 62 und/oder dem ersten und zweiten Variator 50, 56 signalverbunden und/oder wirkend gekoppelt und/oder signalübertragend und/oder datenleitend verbunden. Die Steuereinheit 42 ist konfiguriert, die Drehzahl und/oder das Drehmoment und/oder die Kraft der Antriebsvorrichtung 20, insbesondere des Motors 62, und/oder des ersten und/oder zweiten Variators 50, 56, einzustellen und/oder zu verstellen, insbesondere diese anzusteuern und/oder zu steuern und/oder zu regeln.

Die Steuereinheit 42 kann konfiguriert sein, eine vorgebbare Drehzahl und/oder ein vorgebbares Drehmoment und/oder eine vorgebbare Kraft der Antriebsvorrichtung 20, insbesondere des Motors 62 und/oder des ersten und zweiten Variators 50, 56 einzustellen und/oder zu verstellen, insbesondere diese anzusteuern und/oder zu steuern und/oder zu regeln. Die Steuereinheit 42 kann mit dem Energiespeicher 60 und/oder einer Leistungselektronik 70 und/oder Sensoren der Antriebsvorrichtung 20 signalverbunden und/oder wirkend gekoppelt und/oder signalübertragend und/oder datenleitend verbunden sein. Die Steuereinheit 42 kann konfiguriert sein, die Antriebsvorrichtung 20, insbesondere alternativ oder zusätzlich die Achse 100 oder die Arbeitsmaschine 10, einzustellen und/oder zu verstellen, um die Drehzahl und/oder das Drehmoment und/oder die Kraft des Motors 62 und/oder des ersten und/oder zweiten Variators 50, 56 einzustellen und/oder zu verstellen, insbesondere zu steuern und/oder zu regeln.

Figur 2 zeigt eine schematische Darstellung eines ersten Ausführungsbeispiels der erfindungsgemässen Antriebsvorrichtung 20. Die in Figur 2 gezeigte Antriebsvorrichtung 20 entspricht im Wesentlichen der in Figur 1 Antriebsvorrichtung 20, sodass im Folgenden lediglich auf Details und/oder Unterschiede eingegangen wird. Die in Figur 1 dargestellte Arbeitsmaschine 10 kann die in Figur 2 dargestellte Antriebsvorrichtung 20 umfassen.

Die Antriebsvorrichtung 20 gemäss Figur 2 umfasst den Antrieb 52 und den Abtrieb 54 und den ersten und zweiten Variator 50, 56 und/oder den Motor 62. Ausserdem umfasst die Antriebsvorrichtung 20 die erste Übersetzungseinheit 58, wobei die erste Übersetzungseinheit 58 den ersten und zweiten Eingang 200, 202, insbesondere ein erstes und zweites Antriebselement 250, 252, und einen ersten Ausgang 204 aufweist, und insbesondere zusätzlich einen zweiten Ausgang 206 aufweisen kann. Der zweite Variator 56 ist mit dem Abtrieb 54 über die oder durch die erste Übersetzungseinheit 58, und insbesondere wahlweise zusätzlich über oder durch eine zweite Übersetzungseinheit 212, verbindbar oder verbunden. Ausserdem ist der zweite Variator 56 mit dem ersten und dem zweiten Eingang 200, 202, insbesondere dem ersten und zweiten Antriebselement 250, 252, verbindbar oder verbunden.

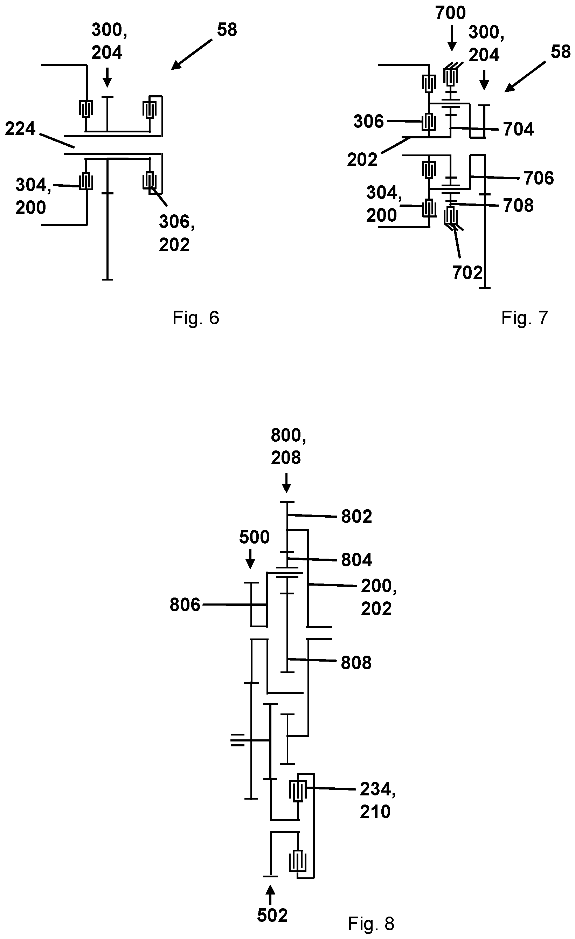

Die erste Übersetzungseinheit 58 kann eine erste Stirnradstufe und/oder eine zweite Stirnradstufe und/oder ein Planetengetriebe, insbesondere ein erstes Planetengetriebe, und mindestens ein erstes und zweites Schaltelement umfassen. Die erste Übersetzungseinheit 58 kann zusätzlich ein drittes Schaltelement 702 umfassen (siehe Figur 7).

Der erste Variator 50 kann als ein erster Elektromotor 420 und der zweite Variator 56 kann als ein zweiter Elektromotor ausgebildet sein. Alternativ können der erste und zweite Variator 50, 56 als Hydrostat ausgebildet sein, wobei insbesondere der erste Variator 50 ein Hydraulikpumpe und der zweite Variator 56 ein Hydraulikmotor sein können. Der zweite Variator 56 kann die Antriebsvorrichtung 20 mit einer Kraft und/oder einer Drehzahl und/oder einem Drehmoment antreiben. Der erste Variator 50 ist antriebsseitig mit dem Antrieb 52 verbunden. Der erste Variator 50 ist über eine oder mit einer oder durch eine erste Übersetzungsstufe 240 mit dem Antrieb 52 verbunden. Der zweite Variator 56 ist über eine oder mit einer oder durch eine zweite Übersetzungsstufe 242 mit dem ersten und zweiten Eingang 200, 202, insbesondere dem ersten und/oder zweiten Antriebselement 250, 252 verbunden. Der Motor 62 kann mit dem Antrieb 52, insbesondere über ein oder mit einem fünften Schaltelement 226, verbindbar oder verbunden sein.

Die Antriebsvorrichtung 20 kann auch die zweite Übersetzungseinheit 212 umfassen, die mindestens eine dritte Stirnradstufe 500 und/oder eine vierte Stirnradstufe 502 und/oder ein zweites Planetengetriebe, und mindestens ein viertes Schaltelement 234 umfasst. Die zweite Übersetzungseinheit weist mindestens einen dritten Eingang 208, insbesondere mit einem dritten Antriebselement, und mindestens einen dritten Ausgang 210, insbesondere mit mindestens einem dritten Abtriebselement, auf. Die erste und zweite Übersetzungseinheit 58, 212 können einen gemeinsamen Eingang 214, insbesondere mit einem gemeinsamen Antriebselement 260, aufweisen. Der gemeinsamen Eingang 214 kann insbesondere den ersten und zweiten und/oder dritten Eingang 200, 202, 208 umfassen. Der zweite Variator 56 kann mit dem dritten Eingang 208 und/oder insbesondere mit dem gemeinsamen Eingang 214 verbunden sein. Dadurch kann eine Kraft und/oder ein Drehmoment und/oder eine Drehzahl vom zweiten Variator 56 zur ersten und/oder zweiten Übersetzungseinheit 58, 212 übertragbar sein. Die zweite Übersetzungseinheit 212 kann im Drehmoment- und/oder Leistungsfluss vor der ersten Übersetzungseinheit 58 angeordnet sein.

Die Antriebsvorrichtung 20 kann ausserdem den ersten Leistungsausgang 46 umfassen. Der Motor 62 und/oder der erste Variator 50 können mit dem ersten Leistungsausgang 46 verbindbar oder verbunden sein, insbesondere mit einem sechsten oder durch ein sechstes Schaltelement 220 mit dem ersten Leistungsausgang 46 verbindbar oder verbunden sein. Im Speziellen können der Motor 62 und/oder der erste Variator 50 durch den oder über den Antrieb 52 mit dem ersten Leistungsausgang 46 verbindbar oder verbunden sein, insbesondere mit dem sechsten oder durch das sechste Schaltelement 220 mit dem ersten Leistungsausgang 46 verbindbar oder verbunden sein. Der erste Leistungsausgang 46 kann eine Zapfwelleneinheit 222 umfassen. Die Zapfwelleneinheit 222 kann ein Zapfwellengetriebe und/oder eine Zapfwelle umfassen. Das fünfte Schaltelement 220 und/oder die Zapfwelleneinheit 222, insbesondere das Zapfwellengetriebe, kann antriebsseitig mit dem Antrieb 52 verbunden sein. Ausserdem kann die Zapfwelleneinheit 222, insbesondere das Zapfwellengetriebe, abtriebsseitig mit der Zapfwelle verbindbar oder verbunden sein. Die erste und/oder zweite Übersetzungseinheit 58, 212 können ausserdem einen Durchgang 224, insbesondere einen zentralen Durchgang, für den Antrieb 52, also insbesondere die Antriebswelle oder Eingangswelle, aufweisen.

Der Abtrieb 54 und/oder die erste Übersetzungseinheit 58 können mit einer Vorgelegewelle 228 verbindbar oder verbunden sein. Die erste Übersetzungseinheit, bevorzugt der erste und/oder zweite Ausgang, besonders bevorzugt die erste und/oder zweite Stirnradstufe oder der erste Planetenträger des ersten Planetengetriebes, kann direkt oder über eine oder mit einer oder durch eine dritte Übersetzungsstufe 230, beispielsweise eine siebte Stirnradstufe oder ein drittes Zahnradpaar oder drei oder mehr Zahnräder oder ein fünftes Planetengetriebe oder ein Getriebe, mit dem Abtrieb 54 und/oder, insbesondere über den Abtrieb 54, mit der Vorgelegewelle 228 verbindbar oder verbunden sein. Alternativ oder zusätzlich kann aber auch der zweite Variator 56 und/oder die zweite Übersetzungseinheit 212, bevorzugt die dritte und/oder vierte Stirnradstufe über das oder mit dem oder durch das vierte Schaltelement 234 mit der Vorgelegewelle 228 und/oder dem Abtrieb 54 verbindbar oder verbunden sein. Die Vorgelegewelle 228 und/oder der Abtrieb 54, insbesondere die Ausgangswelle, kann oder können eine Vollwelle sein. Die Vorgelegewelle 228 und/oder der Abtrieb 54, insbesondere die Ausgangswelle, können koaxial zueinander angeordnet sein. Ausserdem kann die Vorgelegewelle 228 mit dem Fahrantrieb 76, bevorzugt dem Vorderachsantrieb 110, besonders bevorzugt dem ersten Differenzialgetriebe 30 verbunden sein. Die Vorgelegewelle 228 kann mit einer vierten oder über eine vierte Übersetzungsstufe 232, beispielsweise eine sechste Stirnradstufe oder ein Zahnradpaar oder drei oder mehr Zahnräder oder ein sechstes Planetengetriebe oder ein sonstiges Getriebe, und/oder einem weiteren Schaltelement mit einer weiteren Welle 236 verbindbar oder verbunden sein. Die Vorgelegewelle 228 oder die weitere Welle 236 kann mit dem ersten Differenzialgetriebe 30 oder dem Vorderachsdifferenzial verbunden sein. Der Abtrieb 54 kann ausserdem mit dem Fahrantrieb 76, bevorzugt dem Hinterachsantrieb 112, besonders bevorzugt dem zweiten Differenzialgetriebe 32 verbunden sein.

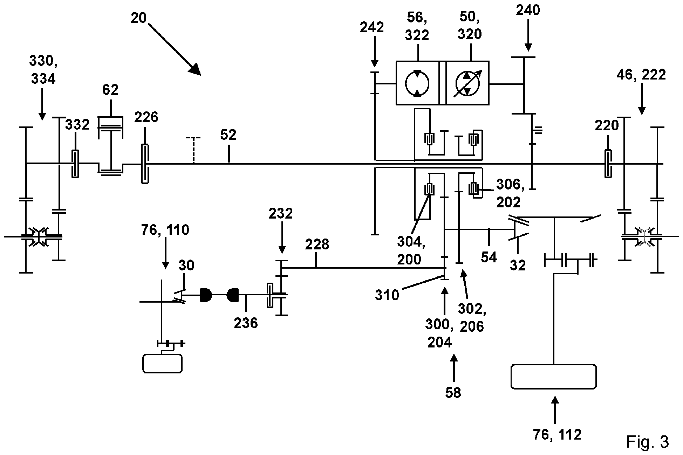

Figur 3 zeigt eine schematische Darstellung des zweiten Ausführungsbeispiels der erfindungsgemässen Antriebsvorrichtung 20. Die in Figur 3 gezeigte Antriebsvorrichtung 20 entspricht im Wesentlichen der in den Figuren 1 und 2 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 3 dargestellte Antriebsvorrichtung 20 umfassen.

Der erste und zweite Variator 50, 56 sind vorliegend als Hydrostat ausgebildet, insbesondere der erste Variator 50 als Hydraulikpumpe 320 und der zweite Variator 56 als Hydraulikmotor 322. Der erste Variator 50 ist über die erste Übersetzungsstufe 240, vorliegend eine fünfte Stirnradstufe oder drei miteinander in Eingriff stehende Zahnräder, mit dem Antrieb 52 verbunden. Der zweite Variator 56 ist über die zweite Übersetzungsstufe 242, vorliegend eine sechste Stirnradstufe, mit dem ersten und zweiten Eingang 200, 202 verbunden. Der Motor 62 ist mit dem Antrieb 52 verbindbar oder verbunden, insbesondere über das fünfte oder mit dem fünften Schaltelement 226.

Die erste Übersetzungseinheit 58 umfasst eine erste Stirnradstufe 300 und eine zweite Stirnradstufe 302 und ein erstes und zweites Schaltelement 304, 306. Das erste Schaltelement 304 ist als der erste Eingang 200 ausgebildet und/oder ist der erste Eingang 200. Alternativ oder zusätzlich kann das erste Schaltelement 304 mit dem ersten Eingang 200, insbesondere dem ersten Antriebselement 250, und/oder mit dem gemeinsamen Eingang 214, insbesondere dem gemeinsamen Antriebselement 260, verbunden sein. Das zweite Schaltelement 306 ist als der zweite Eingang 202 ausgebildet und/oder ist der zweite Eingang 202. Alternativ oder zusätzlich kann das zweite Schaltelement 306 mit dem zweiten Eingang 202, insbesondere dem zweiten Antriebselement 252, und/oder mit dem gemeinsamen Eingang 214, insbesondere dem gemeinsamen Antriebselement 260, verbunden sein. Die erste Stirnradstufe 300 ist als der erste Ausgang 204 ausgebildet und/oder ist der erste Ausgang 204. Alternativ oder zusätzlich kann die erste Stirnradstufe 300 mit dem ersten Ausgang 204, insbesondere dem ersten Abtriebselement 280, verbunden sein. Die erste Stirnradstufe 300 ist mit dem Abtrieb 54 verbunden. Zusätzlich ist die erste Stirnradstufe 300 über ein mit der ersten Stirnradstufe kämmendes Kopplungszahnrad 310 mit der Vorgelegewelle 228 verbunden. Die zweite Stirnradstufe 302 ist als der zweite Ausgang 206 ausgebildet und/oder ist der zweite Ausgang 206. Alternativ oder zusätzlich kann die zweite Stirnradstufe 302 mit dem zweiten Ausgang 206, insbesondere dem zweiten Abtriebselement 282, verbunden sein. Die zweite Stirnradstufe 302 ist ebenfalls mit dem Abtrieb 54 verbunden.

Die Vorgelegewelle 228 ist mit dem ersten Differenzialgetriebe 30 verbunden. Die Vorgelegewelle 228 ist über die vierte Übersetzungsstufe 232, vorliegend eine sechste Stirnradstufe, und einem weiteren Schaltelement mit einer weiteren Welle 236 verbindbar oder verbunden. Die weitere Welle 236 kann ist dem ersten Differenzialgetriebe 30 verbunden. Der Abtrieb 54 ist mit dem zweiten Differenzialgetriebe 32 verbunden.

Die Antriebsvorrichtung 20 kann ausserdem einen zweiten Leistungsausgang 330 umfassen. Der Motor 62 kann mit dem zweiten Leistungsausgang 330 verbindbar oder verbunden sein, insbesondere mit einem siebten oder durch ein siebtes Schaltelement 332 mit dem zweiten Leistungsausgang 330 verbindbar oder verbunden sein. Der zweite Leistungsausgang 330 kann eine weitere Zapfwelleneinheit 334 umfassen. Die weitere Zapfwelleneinheit 334 kann ein weiteres Zapfwellengetriebe und/oder eine weitere Zapfwelle umfassen. Das siebte Schaltelement 330 und/oder die weitere Zapfwelleneinheit 334, insbesondere das Zapfwellengetriebe, kann antriebsseitig mit dem Motor 62 verbunden sein. Ausserdem kann die weitere Zapfwelleneinheit 334, insbesondere das Zapfwellengetriebe, abtriebsseitig mit der Zapfwelle verbindbar oder verbunden sein.

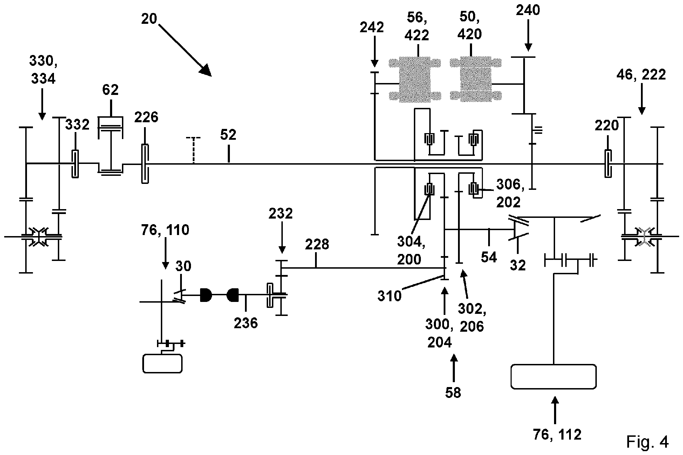

Figur 4 zeigt eine schematische Darstellung des dritten Ausführungsbeispiels der erfindungsgemässen Antriebsvorrichtung 20. Die in Figur 4 gezeigte Antriebsvorrichtung 20 entspricht im Wesentlichen der in den Figuren 1 bis 3 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 4 dargestellte Antriebsvorrichtung 20 umfassen. Fig. 4 zeigt die Antriebsvorrichtung 20, wobei der erste Variator 50 als erster Elektromotor 420 und der zweite Variator 56 als zweiter Elektromotor 422 ausgebildet ist.

Mit dem dritten Ausführungsform gemäss Figur 4 können mit der ersten und/oder zweiten Übersetzungseinheit 58, 212 jeweils zwei Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 1). Im Speziellen können zwei Vorwärts- und zwei Rückwärtsgänge der Antriebsvorrichtung 20 oder Arbeitsmaschine 10 realisiert werden.

**Tabelle 1 - Modi der dritten Ausführungsform.**

| **Vorwärts Modus** | **Rückwärts Modus** | **304** | **306** |
|---|---|---|---|
| Mode 1 | | X | |
| Mode 2 | | | X |
| | Mode 1 | X | |
| | Mode 2 | | X |

Die Modi können durch Öffnen und Schliessen der zu den genannten Bezugszeichen zugehörigen Schaltelemente oder Koppelelemente wie in Tabelle 1 dargestellt realisiert werden. Im Speziellen können die Modi durch Öffnen und Schliessen des ersten Schaltelements 304 und/oder des zweiten Schaltelements 306 wie in Tabelle 1 dargestellt realisiert werden.

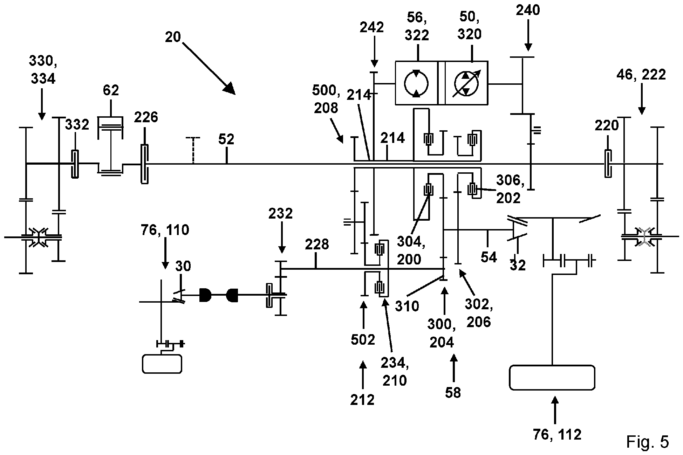

Figur 5 zeigt eine schematische Darstellung des vierten Ausführungsbeispiels der erfindungsgemässen Antriebsvorrichtung 20. Die in Figur 5 gezeigte Antriebsvorrichtung 20 entspricht im Wesentlichen der in den Figuren 1 bis 4 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 5 dargestellte Antriebsvorrichtung 20 umfassen. Die zweite Übersetzungseinheit 212 umfasst die dritte Stirnradstufe 500 und die vierte Stirnradstufe 502 und das vierte Schaltelement 234.

Die zweite Übersetzungseinheit 212 weist den dritten Eingang 208 und den dritten Ausgang 210 auf. Die erste und zweite Übersetzungseinheit 58, 212 sind optional oder alternativ durch den oder über den oder mit dem gemeinsamen Eingang 214 mit dem zweiten Variator 56 verbunden. Dadurch kann eine Kraft und/oder ein Drehmoment und/oder eine Drehzahl vom zweiten Variator 56 zur ersten und zweiten Übersetzungseinheit 58, 212 übertragbar sein. Die dritte Stirnradstufe 500 ist als der dritte Eingang 208 ausgebildet und/oder ist der dritte Eingang 208. Alternativ oder zusätzlich kann die dritte Stirnradstufe 500 mit dem dritten Eingang 208, insbesondere dem dritten Antriebselement 270, und/oder mit dem gemeinsamen Eingang 214, insbesondere dem gemeinsamen Antriebselement 260, verbunden sein. Die vierte Stirnradstufe 502 steht mit der dritten Stirnradstufe 500 in Eingriff, kämmt insbesondere mit der dritten Stirnradstufe 500. Ausserdem ist die vierte Stirnradstufe 502 mit dem vierten Schaltelement 234 verbunden. Das vierte Schaltelement 234 ist als der dritte Ausgang 210 ausgebildet und/oder ist der dritte Ausgang 210. Alternativ oder zusätzlich kann das vierte Schaltelement 234 mit dem dritten Ausgang 210 verbunden sein. Das vierte Schaltelement 234 ist mit der Vorgelegewelle 228 verbindbar oder verbunden. Die zweite Übersetzungseinheit 212, insbesondere die vierte Stirnradstufe 502 ist über das oder durch das oder mit dem vierten Schaltelement 234 mit der Vorgelegewelle 228 verbindbar oder verbunden.

Mit der achten Ausführungsform können mit der ersten, zweiten, dritten und vierten Übersetzungseinheit jeweils vier Modi pro Drehrichtung des Abtriebs der Antriebsvorrichtung, oder mit anderen Worten, in vier Vorwärts- und vier Rückwärtsgänge der Antriebsvorrichtung oder Arbeitsmaschine realisiert werden (siehe Tabelle 2).

Mit dem vierten Ausführungsform gemäss Figur 5 können mit der ersten und zweiten Übersetzungseinheit 58, 212 jeweils drei Modi pro Drehrichtung des Abtriebs 54 der Antriebsvorrichtung 20 oder Arbeitsmaschine 10, oder mit anderen Worten, in Vorwärts- und Rückwärtsrichtung der Antriebsvorrichtung 20 oder Arbeitsmaschine 10 realisiert werden (siehe Tabelle 2). Im Speziellen können drei Vorwärts- und drei Rückwärtsgänge der Antriebsvorrichtung 20 oder Arbeitsmaschine 10 realisiert werden.

**Tabelle 2 - Modi der vierten Ausführungsform.**

| **Vorwärts Modus** | **Rückwärts Modus** | **304** | **306** | **234** |
|---|---|---|---|---|
| Mode 1 | | | | X |
| Mode 2 | | X | | |
| Mode 3 | | | X | |
| | Mode 1 | | | X |
| | Mode 2 | X | | |
| | Mode 3 | | X | |

Die Modi können durch Öffnen und Schliessen der zu den genannten Bezugszeichen zugehörigen Schaltelemente oder Koppelelemente wie in Tabelle 2 dargestellt realisiert werden. Im Speziellen können die Modi durch Öffnen und Schliessen des ersten Schaltelements 304 und/oder des zweiten Schaltelements 306 und/oder des vierten Schaltelements 234 wie in Tabelle 2 dargestellt realisiert werden.

Figur 6 zeigt eine schematische Darstellung eines weiteren Ausführungsbeispiels der ersten Übersetzungseinheit 58, insbesondere ein zu den Figuren 2 bis 5 alternatives Ausführungsbeispiel der ersten Übersetzungseinheit 58. Die in Figur 6 gezeigte erste Übersetzungseinheit 58 entspricht im Wesentlichen der in den Figuren 1 bis 5 gezeigten ersten Übersetzungseinheit 58 der erfindungsgemässen Antriebsvorrichtung 20, sodass im Folgenden lediglich auf Details und/oder Unterschiede eingegangen wird. Die in den Figuren 1 bis 5 dargestellte Antriebsvorrichtung 20 oder Achse 100 oder Arbeitsmaschine 10 kann die in Figur 6 dargestellte erste Übersetzungseinheit 58 umfassen.

Im Ausführungsbeispiel gemäss Figur 6 umfasst die erste Übersetzungseinheit 58 die erste Stirnradstufe 300 und das erste und zweite Schaltelement 304, 306. Das erste Schaltelement 304 ist als der erste Eingang 200 ausgebildet und/oder ist der erste Eingang 200. Alternativ oder zusätzlich kann das erste Schaltelement 304 mit dem ersten Eingang 200, insbesondere dem ersten Antriebselement 250, verbunden sein. Das zweite Schaltelement 306 ist als der zweite Eingang 202 ausgebildet und/oder ist der zweite Eingang 202. Alternativ oder zusätzlich kann das zweite Schaltelement 306 mit dem zweiten Eingang 202, insbesondere dem zweiten Antriebselement 252, verbunden sein. Die erste Stirnradstufe 300 ist als der erste Ausgang 204 ausgebildet und/oder ist der erste Ausgang 204. Alternativ oder zusätzlich kann die erste Stirnradstufe 300 mit dem ersten Ausgang 204, insbesondere dem ersten Abtriebselement 280, verbunden sein. Die erste Stirnradstufe 300 ist mit dem Abtrieb 54 verbunden (siehe auch Figuren 3 bis 5). Der zweite Variator 56 ist durch das oder über das erste Schaltelement 304 mit der ersten Stirnradstufe 300 verbindbar und durch das oder über das zweite Schaltelement 306 mit der ersten Stirnradstufe 300 verbindbar. Ausserdem sind das erste und/oder zweite Schaltelement 304, 306 über die oder mit der ersten Stirnradstufe 300 mit dem Abtrieb 54 verbindbar oder verbunden. Die erste Übersetzungseinheit 58 weist also den ersten und zweiten Eingang 200, 202 und den ersten Ausgang 204 auf.

Figur 7 zeigt eine schematische Darstellung eines weiteren Ausführungsbeispiels der ersten Übersetzungseinheit 58, insbesondere ein zu den Figuren 2 bis 6 alternatives Ausführungsbeispiel der ersten Übersetzungseinheit 58. Die in Figur 7 gezeigte erste Übersetzungseinheit 58 entspricht im Wesentlichen der in den Figuren 1 bis 6 gezeigten ersten Übersetzungseinheit 58 der erfindungsgemässen Antriebsvorrichtung 20, sodass im Folgenden lediglich auf Details und/oder Unterschiede eingegangen wird. Die in den Figuren 1 bis 6 dargestellte Antriebsvorrichtung 20 oder Achse 100 oder Arbeitsmaschine 10 kann die in Figur 7 dargestellte erste Übersetzungseinheit 58 umfassen.

Die erste Übersetzungseinheit 58 umfasst die erste Stirnradstufe 300 und das erste Planetengetriebe 700. Ausserdem umfasst die erste Übersetzungseinheit 58 das erste und das zweite und das dritte Schaltelement 304, 306, 702. Das erste Schaltelement 304 ist als der erste Eingang 200 ausgebildet und/oder ist der erste Eingang 200. Alternativ oder zusätzlich kann das erste Schaltelement 304 mit dem ersten Eingang 200, insbesondere dem ersten Antriebselement 250, verbunden sein. Das zweite Schaltelement 306 und die erste Sonne 704 des ersten Planetengetriebes 700 sind mit dem zweiten Eingang 202, insbesondere dem zweiten Antriebselement 252, verbunden. Alternativ können das zweite Schaltelement 306 und/oder die erste Sonne 704 des ersten Planetengetriebes 700 als der zweite Eingang 202 ausgebildet sein und/oder der zweite Eingang 202 sein. Mit anderen Worten, der zweite Eingang 202, insbesondere das zweite Antriebselement 252, der ersten Übersetzungseinheit 58 ist mit dem zweiten Schaltelement 306 und der ersten Sonne 704 des ersten Planetengetriebes 700 verbunden.

Der zweite Variator 56 ist über das erste und/oder zweite oder mit dem ersten und/oder zweiten Schaltelement 304, 306 mit dem ersten Planetenträger 706 des ersten Planetengetriebes 700 verbindbar oder verbunden. Die erste Stirnradstufe 300 ist als der erste Ausgang 204 ausgebildet und/oder ist der erste Ausgang 204. Alternativ oder zusätzlich kann die erste Stirnradstufe 300 mit dem ersten Ausgang 204, insbesondere dem ersten Abtriebselement 280, verbunden sein. Die erste Stirnradstufe 300 kann mit dem Abtrieb 54 verbunden sein. Das erste Planetengetriebe 700, bevorzugt der erste Planetenträger 706 des ersten Planetengetriebes 700, ist mit der ersten Stirnradstufe 300 verbunden. Das erste und/oder zweite Schaltelement 304, 306 ist über die oder mit der ersten Stirnradstufe 300 mit dem Abtrieb 54, insbesondere der Ausgangswelle, verbindbar oder verbunden. Ebenso ist das erste Planetengetriebe 700, insbesondere der erste Planetenträger 706 über die oder mit der ersten Stirnradstufe 300 mit dem Abtrieb 54 verbunden. Das dritte Schaltelement 702, das hier beispielhaft als Bremse ausgebildet ist, ist mit dem ersten Planetengetriebe 700, bevorzugt einer Komponente des ersten Planetengetriebes 700, besonders bevorzugt dem ersten Hohlrad 708 des ersten Planetengetriebes 700 verbindbar oder verbunden.

Figur 8 zeigt eine schematische Darstellung eines weiteren Ausführungsbeispiels der zweiten Übersetzungseinheit 212, insbesondere ein zu den Figuren 2 bis 5 alternatives Ausführungsbeispiel der zweiten Übersetzungseinheit 212. Die in Figur 8 gezeigte zweite Übersetzungseinheit 212 entspricht im Wesentlichen der in den Figuren 1 bis 5 gezeigten zweiten Übersetzungseinheit 212 der erfindungsgemässen Antriebsvorrichtung 20, sodass im Folgenden lediglich auf Details und/oder Unterschiede eingegangen wird. Die in den Figuren 1 bis 5 dargestellte Antriebsvorrichtung 20 oder Achse 100 oder Arbeitsmaschine 10 kann die in Figur 8 dargestellte zweite Übersetzungseinheit 212 umfassen.

Die zweite Übersetzungseinheit 212 umfasst das zweite Planetengetriebe 800 und die dritte Stirnradstufe 500 und die vierte Stirnradstufe 502 und das vierte Schaltelement 234. Die zweite Übersetzungseinheit 212 weist den dritten Eingang 208 und den dritten Ausgang 210 auf. Das zweite Planetengetriebes 800, bevorzugt eine Komponente des zweiten Planetengetriebes 800, besonders bevorzugt das zweite Hohlrad 802 des zweiten Planetengetriebes 800, ist als der dritte Eingang 208 ausgebildet und/oder ist der dritte Eingang 208. Alternativ oder zusätzlich kann das zweite Planetengetriebes 800, bevorzugt eine Komponente des zweiten Planetengetriebes 800, besonders bevorzugt das zweite Hohlrad 802 des zweiten Planetengetriebes 800, mit dem dritten Eingang 208 verbunden sein. Das zweite Planetengetriebes 800, bevorzugt eine Komponente des zweiten Planetengetriebes 800, besonders bevorzugt das zweite Hohlrad 802 des zweiten Planetengetriebes 800, kann mit dem ersten und/oder zweiten Eingang 200, 202 der ersten Übersetzungseinheit 58 verbindbar oder verbunden. Alternativ können die erste und zweite Übersetzungseinheit 58, 212 also durch den oder über den oder mit dem gemeinsamen Eingang 214 mit dem zweiten Variator 56 verbindbar oder verbunden sein. Dadurch kann eine Kraft und/oder ein Drehmoment und/oder eine Drehzahl vom zweiten Variator 56 zur ersten und zweiten Übersetzungseinheit 58, 212 übertragbar sein.

Das zweite Hohlrad 802 des zweiten Planetengetriebes 800 steht mit dem oder den zweiten Planeten 804 des zweiten Planetengetriebes 800 in Eingriff, kämmt insbesondere mit dem oder den zweiten Planeten 804. Der oder die Planeten 804 des zweiten Planetengetriebes 800 steht mit der zweiten Sonne 808 des zweiten Planetengetriebes 800 in Eingriff, kämmt insbesondere mit der zweiten Sonne 808. Das zweite Planetengetriebes 800, bevorzugt eine Komponente des zweiten Planetengetriebes 800, besonders bevorzugt der zweite Planetenträger 806 des zweiten Planetengetriebes 800, ist mit der dritten Stirnradstufe 500 verbunden. Die vierte Stirnradstufe 502 steht mit der dritten Stirnradstufe 500 in Eingriff, kämmt insbesondere mit der dritten Stirnradstufe 500. Ausserdem ist die vierte Stirnradstufe 502 mit dem vierten Schaltelement 234 verbunden.

Das vierte Schaltelement 234 ist als der dritte Ausgang 210 ausgebildet und/oder ist der dritte Ausgang 210. Alternativ oder zusätzlich kann das vierte Schaltelement 234 mit dem dritten Ausgang 210 verbunden sein. Das vierte Schaltelement 234 kann mit der Vorgelegewelle 228 verbindbar oder verbunden sein. Die zweite Übersetzungseinheit 212, insbesondere die vierte Stirnradstufe 502, kann über das oder durch das oder mit dem vierten Schaltelement 234 mit der Vorgelegewelle 228 verbindbar oder verbunden sein.

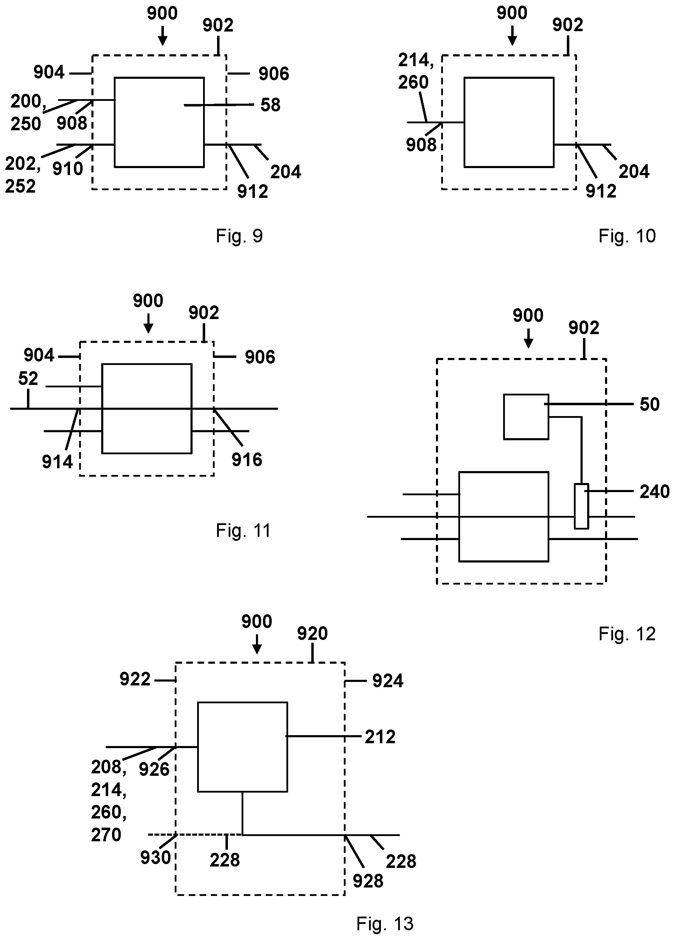

Figur 9 zeigt eine schematische Darstellung eines ersten Ausführungsbeispiel einer erfindungsgemässen Getriebegehäuseanordnung 900. Die in Figur 9 gezeigte Getriebegehäuseanordnung 900 kann die in den Figuren 1 bis 8 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in den Figuren 1 bis 5 dargestellte Achse 100 oder Arbeitsmaschine 10 kann die in Figur 9 dargestellte Getriebegehäuseanordnung 900 umfassen.

Die Gehäusewand des ersten und/oder zweiten Gehäusemoduls können weitere oder zusätzliche Eingangs- und Ausgangsöffnungen aufweisen, insbesondere zur Anbindung an den zweiten Variator und/oder den ersten Variator und/oder der Vorgelegewelle.

Die Getriebegehäuseanordnung 900 umfasst ein erstes Gehäusemodul 902 mit der ersten Übersetzungseinheit 58. Im Speziellen ist die erste Übersetzungseinheit 58 im ersten Gehäusemodul 902 angeordnet. Im ersten Gehäusemodul 902 kann ausserdem zumindest teilweise die Vorgelegewelle 228 angeordnet sein (nicht gezeigt). Das erste Gehäusemodul 902 weist eine eingangsseitige Gehäusewand 904 und eine ausgangsseitigen Gehäusewand 906 auf.

Die eingangsseitige Gehäusewand 904 des ersten Gehäusemoduls 902 weist eine erste und zweite Eingangsöffnung 908, 910 auf. Die ausgangsseitige Gehäusewand 906 des ersten Gehäusemoduls 902 weist eine erste Ausgangsöffnung 912 auf. In der ersten Eingangsöffnung 908 ist der erste Eingang 200, insbesondere das erste Antriebselement 250 angeordnet. Im Speziellen kann sich der erste Eingang 200, insbesondere das erste Antriebselement 250, durch die erste Eingangsöffnung 908 erstrecken. Dadurch kann der erste Eingang 200, insbesondere das erste Antriebselement 250 mit dem zweiten Variator 56 verbindbar sein. In der zweiten Eingangsöffnung 910 ist der zweite Eingang 202, insbesondere das zweite Antriebselement 252, angeordnet. Im Speziellen kann sich der zweite Eingang 202, insbesondere das zweite Antriebselement 252, durch die zweite Eingangsöffnung 910 erstrecken. Dadurch kann der zweite Eingang 202, insbesondere das zweite Antriebselement 252 mit dem zweiten Variator 56 verbindbar sein.

In der ersten Ausgangsöffnung 912 der ausgangsseitigen Gehäusewand 906 des ersten Gehäusemoduls 902 ist der Abtrieb 54, insbesondere die Abtriebswelle oder Ausgangswelle, angeordnet. Im Speziellen kann sich der Abtrieb 54, insbesondere die Abtriebswelle oder Ausgangswelle, zumindest teilweise durch die erste Ausgangsöffnung 912 erstrecken. Zusätzlich kann die Vorgelegewelle 228 in der ersten Eingangsöffnung 908 oder der dritten Eingangsöffnung 926 der eingangsseitigen Gehäusewand 904 des ersten Gehäusemoduls 902 angeordnet sein. Im Speziellen kann sich die Vorgelegewelle 228 durch die erste Eingangsöffnung 908 oder eine dritte Eingangsöffnung 926 erstrecken.

Figur 10 zeigt eine schematische Darstellung eines zweiten Ausführungsbeispiel einer erfindungsgemässen Getriebegehäuseanordnung 900. Die in Figur 10 gezeigte Getriebegehäuseanordnung 900 kann die in den Figuren 1 bis 8 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20 umfassen. Die in Figur 10 gezeigte Getriebegehäuseanordnung 900 entspricht im Wesentlichen der in Figur 9 gezeigten Getriebegehäuseanordnung 900, sodass im Folgenden lediglich auf Details und/oder Unterschiede eingegangen wird. Die in den Figuren 1 bis 5 dargestellte Achse 100 oder Arbeitsmaschine 10 kann die in Figur 10 dargestellte Getriebegehäuseanordnung 900 umfassen.

Die eingangsseitige Gehäusewand 904 des ersten Gehäusemoduls 902 weist nur eine erste Eingangsöffnung 908 auf. In der ersten Eingangsöffnung 908 ist der gemeinsame Eingang 214, insbesondere das gemeinsame Antriebselement 260 angeordnet. Im Speziellen kann sich der gemeinsame Eingang 214, insbesondere das gemeinsame Antriebselement 260, durch die erste Eingangsöffnung 908 erstrecken. Dadurch kann der gemeinsame Eingang 214, insbesondere das gemeinsame Antriebselement 260 mit dem zweiten Variator 56 verbindbar sein. In der ersten Eingangsöffnung 908 können aber auch der erste und zweite Eingang 200, 202, insbesondere das erste und zweite Antriebselement 250, 252 angeordnet sein. Im Speziellen können sich der erste und zweite Eingang 200, 202, insbesondere das erste und zweite Antriebselement 250, 252, durch die erste Eingangsöffnung 908 erstrecken. Dadurch können der erste und zweite Eingang 200, 202, insbesondere das erste und zweite Antriebselement 250, 252, mit dem zweiten Variator 56 verbindbar sein.

Figur 11 zeigt eine schematische Darstellung eines dritten Ausführungsbeispiel einer erfindungsgemässen Getriebegehäuseanordnung 900. Die in Figur 11 gezeigte Getriebegehäuseanordnung 900 kann die in den Figuren 1 bis 8 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 11 gezeigte Getriebegehäuseanordnung 900 entspricht im Wesentlichen der in den Figuren 9 bis 10 gezeigten Getriebegehäuseanordnung 900, sodass im Folgenden lediglich auf Details und/oder Unterschiede eingegangen wird. Die in den Figuren 1 bis 5 dargestellte Achse 100 oder Arbeitsmaschine 10 kann die in Figur 11 dargestellte Getriebegehäuseanordnung 900 umfassen.

Die eingangsseitige Gehäusewand 904 und die ausgangsseitige Gehäusewand 906 des ersten Gehäusemoduls 902 weisen eine erste und zweite Durchgangsöffnung 914, 916, insbesondere eine zentrale erste und zweite Durchgangsöffnung, für den Antrieb 52, insbesondere die Eingangswelle, auf. Der Antrieb 52 ist in der ersten und zweiten Durchgangsöffnung 914, 916 angeordnet. Im Speziellen kann sich der Antrieb 52 durch die erste und zweite Durchgangsöffnung 914, 916 erstrecken. Es können aber auch eine weitere eingangsseitige Gehäusewand und/oder eine weitere ausgangsseitige Gehäusewand des ersten Gehäusemoduls 902 eine erste und zweite Durchgangsöffnung 914, 916, insbesondere eine zentrale erste und zweite Durchgangsöffnung, für den Antrieb 52, insbesondere die Eingangswelle, aufweisen.

Figur 12 zeigt eine schematische Darstellung eines vierten Ausführungsbeispiel einer erfindungsgemässen Getriebegehäuseanordnung 900. Die in Figur 12 gezeigte Getriebegehäuseanordnung 900 kann die in den Figuren 1 bis 8 gezeigte Antriebsvorrichtung 20 oder Komponenten der Antriebsvorrichtung 20, insbesondere erste und/oder zweite Übersetzungseinheiten 58, 212 und/oder den ersten und zweiten Variator 50, 56 der erfindungsgemässen Antriebsvorrichtung 20, umfassen. Die in Figur 12 gezeigte Getriebegehäuseanordnung 900 entspricht im Wesentlichen der in den Figuren 9 bis 11 gezeigten Getriebegehäuseanordnung 900, sodass im Folgenden lediglich auf Details und/oder Unterschiede eingegangen wird. Die in den Figuren 1 bis 5 dargestellte Achse 100 oder Arbeitsmaschine 10 kann die in Figur 12 dargestellte Getriebegehäuseanordnung 900 umfassen. Im ersten Gehäusemodul 902 ist zusätzlich der erste Variator 50 und optional die erste Übersetzungsstufe 240 angeordnet.

Figur 13 zeigt eine schematische Darstellung eines fünften Ausführungsbeispiel einer erfindungsgemässen Getriebegehäuseanordnung 900. Die in Figur 13 gezeigte Getriebegehäuseanordnung 900 kann die in den Figuren 1 bis 8 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 13 gezeigte Getriebegehäuseanordnung 900 entspricht im Wesentlichen der in den Figuren 9 bis 12 gezeigten Getriebegehäuseanordnung 900, sodass im Folgenden lediglich auf Details und/oder Unterschiede eingegangen wird. Die in den Figuren 1 bis 5 dargestellte Achse 100 oder Arbeitsmaschine 10 kann die in Figur 13 dargestellte Getriebegehäuseanordnung 900 umfassen.

Die Getriebegehäuseanordnung 900 umfasst ein zweites Gehäusemodul 920 mit der zweiten Übersetzungseinheit 212. Im Speziellen ist die zweite Übersetzungseinheit 212 im zweiten Gehäusemodul 920 angeordnet. Das zweite Gehäusemodul 920 weist eine eingangsseitige Gehäusewand 922 und eine ausgangsseitigen Gehäusewand 924 auf. Die eingangsseitige Gehäusewand 922 des zweiten Gehäusemoduls 920 weist mindestens eine weitere Eingangsöffnung, insbesondere eine vierte Eingangsöffnung 926 auf. Die ausgangsseitige Gehäusewand 924 des zweiten Gehäusemoduls 920 weist eine zweite Ausgangsöffnung 928 auf.

In der weiteren Eingangsöffnung, insbesondere der vierten Eingangsöffnung 926, ist der dritte Eingang 208, insbesondere das dritte Antriebselement 270, angeordnet. Im Speziellen kann sich der dritte Eingang 208, insbesondere das dritte Antriebselement 270, durch die dritte Eingangsöffnung 926 erstrecken. Dadurch kann der dritte Eingang 208, insbesondere das dritte Antriebselement 270 mit dem zweiten Variator 56 verbindbar oder verbunden sein. Alternativ kann in der dritten Eingangsöffnung 926 der gemeinsame Eingang 214, insbesondere das gemeinsame Antriebselement 260, angeordnet sein. Im Speziellen kann sich der gemeinsame Eingang 214, insbesondere das gemeinsame Antriebselement 260, durch die dritte Eingangsöffnung 926 erstrecken. Dadurch kann der gemeinsame Eingang 214, insbesondere das gemeinsame Antriebselement 260 mit dem zweiten Variator 56 verbindbar sein.

In der zweiten Ausgangsöffnung 928 der ausgangsseitigen Gehäusewand 924 des zweiten Gehäusemoduls 920 ist die Vorgelegewelle 228 angeordnet. Im Speziellen kann sich die Vorgelegewelle 228 durch die zweite Ausgangsöffnung 928 erstrecken. Die Vorgelegewelle 228 kann optional ausserdem in einer fünften Eingangsöffnung 930 der eingangsseitigen Gehäusewand 922 des zweiten Gehäusemoduls 920 angeordnet sein. Im Speziellen kann sich die Vorgelegewelle 228 durch die fünfte Eingangsöffnung 930 erstrecken.

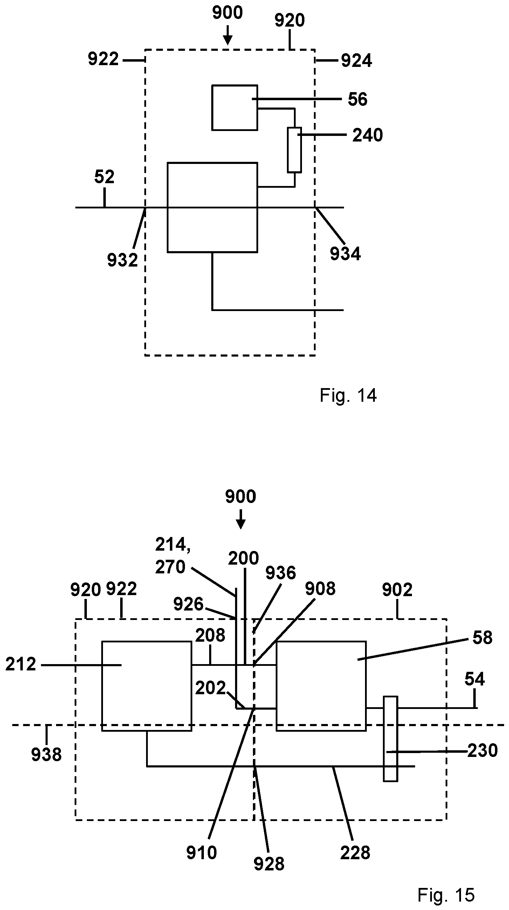

Figur 14 zeigt eine schematische Darstellung eines sechsten Ausführungsbeispiel einer erfindungsgemässen Getriebegehäuseanordnung 900. Die in Figur 14 gezeigte Getriebegehäuseanordnung 900 kann die in den Figuren 1 bis 8 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 14 gezeigte Getriebegehäuseanordnung 900 entspricht im Wesentlichen der in den Figuren 9 bis 13 gezeigten Getriebegehäuseanordnung 900, sodass im Folgenden lediglich auf Details und/oder Unterschiede eingegangen wird. Die in den Figuren 1 bis 5 dargestellte Achse 100 oder Arbeitsmaschine 10 kann die in Figur 14 dargestellte Getriebegehäuseanordnung 900 umfassen. Die eingangsseitige Gehäusewand 922 und die ausgangsseitige Gehäusewand 924 des zweiten Gehäusemoduls 920 weisen eine dritte und vierte Durchgangsöffnung 932, 934, insbesondere eine zentrale dritte und vierte Durchgangsöffnung, für den Antrieb 52, insbesondere die Eingangswelle, auf. Der Antrieb 52 ist in der dritten und vierten Durchgangsöffnung 932, 934 angeordnet. Im Speziellen kann sich der Antrieb 52 durch die dritte und vierte Durchgangsöffnung 932, 934 erstrecken.

Es können aber auch eine weitere eingangsseitige Gehäusewand und/oder eine weitere ausgangsseitige Gehäusewand des zweiten Gehäusemoduls 920 eine dritte und vierte Durchgangsöffnung 932, 934, insbesondere eine zentrale dritte und vierte Durchgangsöffnung, für den Antrieb 52, insbesondere die Eingangswelle, aufweisen. Ausserdem können im zweiten Gehäusemodul 920 der zweite Variator 56 und/oder die zweite Übersetzungsstufe 242 angeordnet sein.

Figur 15 zeigt eine schematische Darstellung eines siebten Ausführungsbeispiel einer erfindungsgemässen Getriebegehäuseanordnung 900. Die in Figur 15 gezeigte Getriebegehäuseanordnung 900 kann die in den Figuren 1 bis 8 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 15 gezeigte Getriebegehäuseanordnung 900 entspricht im Wesentlichen der in den Figuren 9 bis 14 gezeigten Getriebegehäuseanordnung 900, sodass im Folgenden lediglich auf Details und/oder Unterschiede eingegangen wird. Die in den Figuren 1 bis 5 dargestellte Achse 100 oder Arbeitsmaschine 10 kann die in Figur 15 dargestellte Getriebegehäuseanordnung 900 umfassen.

Die eingangsseitige Gehäusewand 904 des ersten Gehäusemoduls 902 und die ausgangsseitige Gehäusewand 924 des zweiten Gehäusemoduls 920 sind als eine gemeinsame Gehäusewand 936 des ersten und zweiten Gehäusemoduls 902, 920 ausgebildet. Das erste Gehäusemodul 902 kann mit dem zweiten Gehäusemodul 920 verbunden sein, insbesondere über die oder durch die gemeinsame Gehäusewand 936. Die gemeinsame Gehäusewand 936 des ersten und zweiten Gehäusemoduls 902, 920 weisen als gemeinsame Öffnungen die erste und zweite Eingangsöffnung 908, 910 und die zweite Ausgangsöffnung 928 auf.

Der erste und zweite Eingang 200, 202, insbesondere das erste und zweite Antriebselement 250, 252, sind in der ersten und zweiten Eingangsöffnung 908, 910 in der gemeinsamen Gehäusewand 936 angeordnet. Im Speziellen können sich der erste und zweite Eingang 200, 202, insbesondere das erste und zweite Antriebselement 250, 252, durch die erste und zweite Eingangsöffnung 908, 910 erstrecken. Der erste und zweite und dritte Eingang 200, 202, 208 sind zum gemeinsamen Eingang 214, insbesondere dem gemeinsamen Antriebselement 260, verbunden.

Der gemeinsame Eingang 214, insbesondere das gemeinsamen Antriebselement 260, sind in der vierten Eingangsöffnung 926 in der eingangsseitigen Gehäusewand 922 des zweiten Gehäusemoduls 920 angeordnet. Im Speziellen kann sich der gemeinsame Eingang 214, insbesondere das gemeinsamen Antriebselement 260, durch die vierten Eingangsöffnung 926 erstrecken. Das erste und zweite Gehäusemodule 902, 920 sind entlang einer Längsachse 938 der Getriebegehäuseanordnung 900 angeordnet.

Die Vorgelegewelle 228 ist im ersten und zweiten Gehäusemodul 902, 920 angeordnet. Darüber hinaus ist die Vorgelegewelle 228 in der zweiten Ausgangsöffnung 928 in der gemeinsamen Gehäusewand 936 angeordnet. Im Speziellen können sich die Vorgelegewelle 228 durch die zweiten Ausgangsöffnung 928 erstrecken. Ausserdem sind der Abtrieb 54 und die Vorgelegewelle 228 durch die dritte Übersetzungsstufe 230 miteinander verbindbar oder verbunden.

Figur 16 zeigt eine schematische Darstellung eines achten Ausführungsbeispiel einer erfindungsgemässen Getriebegehäuseanordnung 900. Die in Figur 16 gezeigte Getriebegehäuseanordnung 900 kann die in den Figuren 1 bis 8 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 16 gezeigte Getriebegehäuseanordnung 900 entspricht im Wesentlichen der in den Figuren 9 bis 15 gezeigten Getriebegehäuseanordnung 900, sodass im Folgenden lediglich auf Details und/oder Unterschiede eingegangen wird. Die in den Figuren 1 bis 5 dargestellte Achse 100 oder Arbeitsmaschine 10 kann die in Figur 16 dargestellte Getriebegehäuseanordnung 900 umfassen.

Das erste Gehäusemodul 902 ist mit dem zweiten Gehäusemodul 920 verbunden, insbesondere über die oder durch die gemeinsame Gehäusewand 936. Das erste und zweite Gehäusemodul 902, 920 sind mit oder durch eine oder mehrere Befestigungsflächen 950 und Gehäuseflansche 952 miteinander verbunden, bevorzugt aneinander befestigt, besonders bevorzugt lösbar aneinander befestigt. Die erste Durchgangsöffnung 914 und die vierte Durchgangsöffnung 934 sind als eine gemeinsame Durchgangsöffnung 954, insbesondere eine zentrale gemeinsame Durchgangsöffnung, in der gemeinsamen Gehäusewand 936 ausgebildet.

Der Antrieb 52 ist in der ersten Durchgangsöffnung 914, der gemeinsamen Durchgangsöffnung 954 und der vierten Durchgangsöffnung 934 angeordnet. Im Speziellen kann sich der Antrieb 52 durch die erste Durchgangsöffnung 914 und die gemeinsame Durchgangsöffnung 954 und die vierte Durchgangsöffnung 934 erstrecken.

Figur 17 zeigt eine detaillierte schematische Darstellung eines weiteren Ausführungsbeispiels der erfindungsgemässen Arbeitsmaschine 10 mit einer erfindungsgemässen Getriebegehäuseanordnung 900. Die in Figur 17 gezeigte Getriebegehäuseanordnung 900 kann die in den Figuren 1 bis 8 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 17 gezeigte Getriebegehäuseanordnung 900 entspricht im Wesentlichen der in den Figuren 9 bis 16 gezeigten Getriebegehäuseanordnung 900, sodass im Folgenden lediglich auf Details und/oder Unterschiede eingegangen wird. Die in den Figuren 1 bis 5 dargestellte Achse 100 oder Arbeitsmaschine 10 kann die in Figur 17 dargestellten Getriebegehäuseanordnung 900 umfassen.

Figur 17 zeigt eine schematisch zwei Rahmenelemente 960, insbesondere ein erstes und zweites Rahmenelement 962, 964, der Arbeitsmaschine 10. Die Getriebegehäuseanordnung 900, insbesondere das erste und/oder zweite Gehäusemodul 902, 920, sind an, insbesondere zwischen, den zwei Rahmenelementen 960, insbesondere dem ersten und zweiten Rahmenelement 962, 960, angeordnet. Die Rahmenelemente 960, 962, 964 können an, insbesondere zwischen oder unmittelbar benachbart zu, dem ersten und zweiten Differenzialgetriebe 30, 32 angeordnet sein. Die Rahmenelemente 960, 962, 964 können mit dem ersten und/oder zweiten Differenzialgetriebe 30, 32 verbunden sein. Der Motor 62 kann an, insbesondere auf oder zwischen den zwei Rahmenelementen 960, insbesondere dem ersten und zweiten Rahmenelement 962, 964, angeordnet sein. Die Getriebegehäuseanordnung 900, insbesondere das erste und/oder zweite Gehäusemodul 902, 920, sind entlang einer Längsachse 970 der Arbeitsmaschine 10 angeordnet. Die Längsachse 938 der Getriebegehäuseanordnung 900 und die Längsachse 970 der Arbeitsmaschine 10 können identisch oder parallel sein.

## Patentansprüche

1. Antriebsvorrichtung für eine Arbeitsmaschine (10) oder eine Achse (100) oder eine Getriebegehäuseanordnung (900), umfassend:
einen Antrieb (52), einen Abtrieb (54), einen ersten und zweiten Variator (50, 56), eine erste Übersetzungseinheit (58) mit mindestens einem ersten Eingang (200) und einem zweiten Eingang (200) und mindestens einem ersten Ausgang (204), wobei der erste Variator (50) mit dem Antrieb (52) verbunden ist, und der zweite Variator (56) mit dem ersten und zweiten Eingang (200, 202) verbunden ist, wobei der zweite Variator (56) über die erste Übersetzungseinheit (58) mit dem Abtrieb (54) verbindbar ist.

2. Antriebsvorrichtung nach Anspruch 1, **dadurch gekennzeichnet, dass** die erste Übersetzungseinheit (58) eine erste Stirnradstufe (320) und/oder eine zweite Stirnradstufe (500) und/oder ein Planetengetriebe, insbesondere ein erstes Planetengetriebe (600), und mindestens ein erstes und zweites Schaltelement (324, 326) umfasst.

3. Antriebsvorrichtung nach mindestens einem der vorangehenden Ansprüche, **dadurch gekennzeichnet, dass** die Antriebsvorrichtung (20) eine zweite Übersetzungseinheit (212) umfasst, und/oder die zweite Übersetzungseinheit (212) mindestens eine dritte Stirnradstufe (500) und/oder eine vierte Stirnradstufe (502) und/oder ein zweites Planetengetriebe (600), und mindestens ein viertes Schaltelement (234) umfasst und/oder die zweite Übersetzungseinheit (212) mindestens einen dritten Eingang (208) und mindestens einen dritten Ausgang (210) aufweist und/oder die erste und zweite Übersetzungseinheit (58, 212) einen gemeinsamen Eingang (214) aufweisen.

4. Antriebsvorrichtung nach mindestens einem der vorangehenden Ansprüche, **dadurch gekennzeichnet, dass** der erste Variator (50) als ein erster Elektromotor (420) und der zweite Variator (56) als ein zweiter Elektromotor (422) ausgebildet sind, oder der erste und zweite Variator (50, 56) als ein Hydrostat ausgebildet sind.

5. Antriebsvorrichtung nach mindestens einem der vorangehenden Ansprüche, **dadurch gekennzeichnet, dass** die Antriebsvorrichtung (20) einen Motor (62) umfasst, und/oder der Motor (62) mit dem Antrieb (52) verbindbar ist, und/oder der Motor über den oder durch den Antrieb (52) mit dem ersten Variator (50) verbindbar oder verbunden ist.

6. Antriebsvorrichtung nach mindestens einem der vorangehenden Ansprüche, **dadurch gekennzeichnet, dass** die erste und/oder zweite Übersetzungseinheit (58, 212) einen Durchgang (224) für den Antrieb (52) aufweisen.

7. Antriebsvorrichtung nach mindestens einem der vorangehenden Ansprüche, **dadurch gekennzeichnet, dass** der erste Variator (50) und/oder der Motor (62) mit einem ersten Leistungsausgang (46) verbindbar oder verbunden ist.

8. Antriebsvorrichtung nach mindestens einem der vorangehenden Ansprüche, **dadurch gekennzeichnet, dass** der Abtrieb (54) und/oder die erste und/oder zweite Übersetzungseinheit (58, 212) mit einer Vorgelegewelle (228) verbindbar oder verbunden ist.

9. Antriebsvorrichtung nach mindestens einem der vorangehenden Ansprüche, **dadurch gekennzeichnet, dass** die Antriebsvorrichtung (20) eine Steuereinheit (42) umfasst.

10. Achse mit einer Antriebsvorrichtung nach Anspruch 1 bis 9.

11. Getriebegehäuseanordnung mit einer Antriebsvorrichtung nach einem der Ansprüche 1 bis 9, **dadurch gekennzeichnet, dass** die Getriebegehäuseanordnung (900) ein erstes Gehäusemodul (902) mit der ersten Übersetzungseinheit (58) umfasst, wobei das erste Gehäusemodul (902) eine eingangsseitige Gehäusewand (904) und eine ausgangsseitigen Gehäusewand (906) aufweist, und die eingangsseitige Gehäusewand (904) des ersten Gehäusemoduls (902) mindestens eine erste Eingangsöffnung (908) aufweist, und die ausgangsseitige Gehäusewand (906) des ersten Gehäusemoduls (902) eine erste Ausgangsöffnung (912) aufweist.

12. Getriebegehäuseanordnung nach Anspruch 11, **dadurch gekennzeichnet, dass** die Getriebegehäuseanordnung (900) ein zweites Gehäusemodul (920) mit der zweiten Übersetzungseinheit (212) umfasst, wobei das zweite Gehäusemodul (920) eine eingangsseitige Gehäusewand (922) und eine ausgangsseitigen Gehäusewand (924) aufweist, und die eingangsseitige Gehäusewand (922) des zweiten Gehäusemoduls (920) mindestens eine weitere, insbesondere eine vierte Eingangsöffnung (926) aufweist, und die ausgangsseitige Gehäusewand (924) des zweiten Gehäusemoduls (920) eine zweite Ausgangsöffnung (928) aufweist.

13. Getriebegehäuseanordnung nach Anspruch 11 oder 12, **dadurch gekennzeichnet, dass** die Getriebegehäuseanordnung (900) eine Längsachse (938) aufweist, und das erste und/oder zweite Gehäusemodul (902, 920) entlang der Längsachse (938) der Getriebegehäuseanordnung (900) angeordnet sind.

14. Arbeitsmaschine mit einer Antriebsvorrichtung (20) nach Anspruch 1 bis 9 oder mit einer Achse (100) nach Anspruch 10 oder mit einer Getriebegehäuseanordnung (900) nach Anspruch 11 bis 13.

15. Arbeitsmaschine nach Anspruch 14, **dadurch gekennzeichnet, dass** die Arbeitsmaschine (10) zwei Rahmenelemente (960, 962, 964) umfasst, wobei die Antriebsvorrichtung (20), insbesondere die Getriebegehäuseanordnung (900), zumindest teilweise an den Rahmenelementen (960, 962, 964) angeordnet ist.
